# EUROPEAN PATENT SPECIFICATION

(11) **EP 2 993 990 B1**
(45) Date of publication and mention of the grant of the patent: **13.11.2019**
(21) Application number: 14769423.6
(22) Date of filing: 14.03.2014
(51) Int. Cl.: A23L 2/60, A23L 27/30, A23L 2/52

(54) **BEVERAGES CONTAINING RARE SUGARS**
GETRÄNKE MIT SELTENEN ZUCKERN
BOISSONS CONTENANT DES SUCRES RARES

(30) Priority: 14.03.2013 US 201361783073 P; 10.10.2013 US 201314050840
(43) Date of publication of application: 16.03.2016
(73) Proprietor: The Coca-Cola Company, Atlanta, GA 30313 (US)
(72) Inventor: PRAKA, Indra, Alpharetta, GA 30022 (US); HIGIRO, Juvenal, Atlanta, GA 30345 (US); SCOTT, Robert, Douglasville, GA 30135 (US); MA, Gil, Atlanta, GA 30308 (US)
(74) Representative: Dehns
(86) International application number: PCT/US2014/027747
(87) International publication number: WO 2014/152791

(56) References cited:
- WO-A2-2007/070224
- US-A1- 2007 082 106
- US-A1- 2007 128 311
- US-A1- 2009 304 891
- US-A1- 2011 091 634
- US-A1- 2012 076 908
- US-A1- 2012 128 852

## Description

### FIELD OF THE INVENTION

The present invention relates to beverages containing a rare sugar and a natural high potency sweetener in particular weight ratios. The beverages of the present invention have improved flavor and temporal profiles.

### BACKGROUND OF THE INVENTION

Natural caloric sugars, such as sucrose, fructose and glucose, are utilized to provide a pleasant taste to beverages. Sucrose, in particular, imparts a taste preferred by consumers. Although sucrose provides superior sweetness characteristics, it is caloric. Non-caloric or low caloric sweeteners have been introduced to satisfy consumer demand. However, sweeteners within this class differ from natural caloric sugars in ways that continue to frustrate consumers. On a taste basis, non-caloric or low caloric sweeteners exhibit a temporal profile, maximal response, flavor profile, mouth feel, and/or adaptation behavior that differ from sugar. Specifically, non-caloric or low caloric sweeteners exhibit delayed sweetness onset, lingering sweet aftertaste, bitter taste, metallic taste, astringent taste, cooling taste and/or licorice-like taste. On a source basis, many non-caloric or low caloric sweeteners are synthetic chemicals.

Accordingly, the desire for beverages containing natural non-caloric or low caloric sweeteners that taste like beverages containing sucrose remains high.

D-psicose (allulose) is a rare sugar found in small quantities in molasses and isomerized sugars. It can also be prepared enzymatically from D-fructose with epimerase. D-psicose contains almost no calorie content and yields less than about 0.2% metabolic energy of the equivalent amount of sucrose. D-psicose is self-GRAS with a letter of no objection from the US FDA. It is currently approved at a maximum level of 2.1% (w/w) in a non-alcoholic beverage. However, 2% (w/w) D-psicose has a sucrose equivalence of only about 1.26% when prepared in a citric acid/potassium citrate matrix, thereby limiting its use in beverages.

Accordingly, there remains a need to develop beverages containing rare sugars, particularly D-psicose, with increased sucrose equivalence.

The use of D-psicose in combination with other sweeteners, such as a sugar alcohol and/or a high intensity sweetener, is disclosed in US 2009/0304891. Combinations of high intensity sweeteners with other compounds, such as carbohydrates, polyols, amino acids and other sweet taste improving additives, are disclosed in US 2007/0128311.

### SUMMARY OF THE INVENTION

The present invention is directed to a beverage comprising the rare sugar D-psicose and the high potency sweetener Rebaudioside M, wherein the Rebaudioside M is greater than 80% pure, the D-psicose is present in an amount from 0.1% by 2% by weight and the weight ratio of Rebaudioside M to D-psicose is from 1:25 to 1:100.

The beverages disclosed herein can be any suitable beverage, including a carbonated or non-carbonated beverage. Low- and zero-calories beverages are provided. The beverages can comprise various beverage matrices, preferably citric acid buffer, and one or more additional sweeteners and/or functional ingredients.

### DETAILED DESCRIPTION OF THE INVENTION

The present invention is directed to beverages defined in the claims and containing rare sugars, particularly where rare sugars are the primary sweeteners in a beverage. The disclosure includes methods of making the same or methods of sweetening a beverage comprising a rare sugar.

### Beverages Containing Rare Sugars and Natural High Potency Sweeteners

The present invention is also based on the discovery that beverages containing natural high potency sweeteners and rare sugars, wherein the two components are present in particular weight ratios, have improved flavor and temporal profiles, and taste more like sugar-sweetened beverages compared to corresponding beverages containing the same natural high potency in the absence of the rare sugar.

As used herein, the "sugar-sweetened" characteristics include any characteristic similar to that of beverages containing sucrose and include, but are not limited to, maximal response, flavor profile, temporal profile, adaptation behavior, mouthfeel, concentration/response function, tastant/and flavor/sweet taste interactions, spatial pattern selectivity, and temperature effects.

The flavor profile of a beverage is a quantitative profile of the relative intensities of all of the taste attributes exhibited. Such profiles often are plotted as histograms or radar plots.

These characteristics are dimensions in which the taste of a beverage containing sucrose is different from the tastes of a beverage containing a non-sucrose sweetener(s). Of these, however, the flavor profile and temporal profile are particularly important. In a single tasting of a sweet beverage, differences (1) in the attributes that constitute a beverage's flavor profile and (2) in the rates of sweetness onset and dissipation, which constitute a beverage's temporal profile, between those observed for sucrose and for non-sucrose sweetener compositions can be noted.

Whether or not a beverage has sugar-sweetened characteristics is determined by an expert sensory panel who taste beverages comprising sugar and beverages compositions comprising non-sucrose sweetener compositions, both with and without additives, and provide their impression as to the similarities of the characteristics of the beverages, both with and without additives, with those comprising sugar. A suitable procedure for determining whether a beverage has a more sugar-like taste is described in embodiments described herein below.

In a particular embodiment, a panel of assessors is used to measure the reduction of sweetness linger. Briefly described, a panel of assessors (generally 8 to 12 individuals) is trained to evaluate sweetness perception and measure sweetness at several time points from when the sample is initially taken into the mouth until 3 minutes after it has been expectorated. Using statistical analysis, the results are compared between samples containing additives and samples that do not contain additives. A decrease in score for a time point measured after the sample has cleared the mouth indicates there has been a reduction in sweetness perception.

The panel of assessors may be trained using procedures well known to those of ordinary skill in the art. In a particular embodiment, the panel of assessors may be trained using the Spectrum™ Descriptive Analysis Method (Meilgaard et al, Sensory Evaluation Techniques, 3rd edition, Chapter 11). Desirably, the focus of training should be the recognition of and the measure of the basic tastes; specifically, sweet. In order to ensure accuracy and reproducibility of results, each assessor should repeat the measure of the reduction of sweetness linger about three to about five times per sample, taking at least a five minute break between each repetition and/or sample and rinsing well with water to clear the mouth.

Generally, the method of measuring sweetness comprises taking a 10 mL sample into the mouth, holding the sample in the mouth for 5 seconds and gently swirling the sample in the mouth, rating the sweetness intensity perceived at 5 seconds, expectorating the sample (without swallowing following expectorating the sample), rinsing with one mouthful of water (e.g., vigorously moving water in mouth as if with mouth wash) and expectorating the rinse water, rating the sweetness intensity perceived immediately upon expectorating the rinse water, waiting 45 seconds and, while waiting those 45 seconds, identifying the time of maximum perceived sweetness intensity and rating the sweetness intensity at that time (moving the mouth normally and swallowing as needed), rating the sweetness intensity after another 10 seconds, rating the sweetness intensity after another 60 seconds (cumulative 120 seconds after rinse), and rating the sweetness intensity after still another 60 seconds (cumulative 180 seconds after rinse). Between samples take a 5 minute break, rinsing well with water to clear the mouth.

The beverage comprises from about 0.1% to about 2% of a rare sugar by weight which is D-psicose and a natural high potency sweetener which is Rebaudioside M, wherein the weight ratio of the natural high potency sweetener to D-psicose is from 1:25 to 1:100.

The natural high potency sweetener is Rebaudioside M (13-[(2-*O*-β-D-glucopyranosyl-3-*O*-β-D-glucopyranosyl-β-D-glucopyranosyl)oxy] *ent* kaur-16-en-19-oic acid[(2-*O*-β-D-glucopyranosyl-3-*O*-β-D-glucopyranosyl-β-D-glucopyranosyl) ester]). Rebaudioside M is greater than about 80% pure. In a particular embodiment, Rebaudioside M is present as a pure compound. In another embodiment, Rebaudioside M is present in high purity in a stevia extract or steviol glycoside mixture. In a more particular embodiment, Rebaudioside M is about 97% pure.

The weight ratio of natural high potency sweetener to rare sugar has been found to effect the flavor and temporal properties of the beverage. The weight ratio of the natural high potency sweetener to rare sugar is from 1:25 to about 1:100, such as, for example, about 1:100 and about 1:50.

In one embodiment, the beverage is a carbonated or non-carbonated beverage.

Carbonated beverages include, but are not limited to, enhanced sparkling beverages (i.e. carbonated soft drinks), cola, lemon-lime flavored sparkling beverage (i.e. lemon-lime carbonated soft drink), orange flavored carbonated soft drinks, grape flavored s carbonated soft drinks, strawberry flavored carbonated soft drinks, pineapple flavored carbonated soft drinks, ginger-ale, soft drinks and root beer.

In a particular embodiment, the beverage is a lemon-lime carbonated soft drink.

Non-carbonated beverages include, but are not limited to fruit juice, fruit-flavored juice, juice drinks, nectars, vegetable juice, vegetable-flavored juice, sports drinks, energy drinks, enhanced water drinks, enhanced water with vitamins, near water drinks (e.g., water with natural or synthetic flavorants), coconut water, tea type drinks (e.g. black tea, green tea, red tea, oolong tea), coffee, cocoa drink, beverage containing milk components (e.g. milk beverages, coffee containing milk components, cafe au lait, milk tea, fruit milk beverages), beverages containing cereal extracts, smoothies and combinations thereof.

The beverages comprise a liquid matrix, i.e. the basic ingredient in which the ingredients are dissolved. In one embodiment, a beverage comprises water of beverage quality as the liquid matrix, such as, for example deionized water, distilled water, reverse osmosis water, carbon-treated water, purified water, demineralized water and combinations thereof, can be used. Additional suitable liquid matrices include, but are not limited to phosphoric acid, citric acid, tartaric acid, lactic acid and buffers comprising such acids. For example, suitable matrices also include phosphoric acid buffer or citric acid buffer.

In one embodiment, the beverage matrix comprises citric acid and water.

The present invention provides a beverage comprising a high purity natural high potency sweetener and a rare sugar in an amount from 0.1% to 2% by weight, wherein the weight ratio of the natural high potency sweetener to rare sugar is from 1:25 to 1:100.

According to the present invention, said beverage comprises high purity Rebaudioside M and from about 0.1% to about 2% D-psicose by weight, preferably about 2%, wherein the ratio of Rebaudioside M to D-psicose is from about 1:25 to about 1:100, such as, for example, from about 1:30 to about 1:50. The rebaudioside M is greater than 80% pure. In some embodiments, the beverage further comprises sucrose. In some embodiments, the beverage is a reduced calorie beverage, e.g. a reduced calorie lemon-lime carbonated soft drink. In other embodiments, the beverage is a zero-calorie beverage, e.g. a zero-calorie lemon-lime carbonated soft drink.

The concentration of the natural high potency sweetener can vary depending on the identity of the beverage and the desired temporal and flavor properties.

The natural high potency sweetener is Rebaudioside M, and in some embodiments, the concentration of the high potency sweetener in the beverage can be from about 1 ppm to about 300 ppm, such as, for example, from about 30 ppm to about 250 ppm, from about 20 ppm to about 50 ppm or from about 30 ppm to about 40 ppm.

In another embodiment, a beverage is provided comprising about 1% to about 2% D-psicose and about 25-100 ppm high purity Rebaudioside M. The beverage may further comprise sucrose. The beverage can be, for example, a lemon-lime carbonated soft drink.

It is contemplated that the pH of the beverage may be from about 1.8 to about 10. A further example includes a pH range from about 2 to about 5. In a particular embodiment, the pH of beverage can be from about 2.5 to about 4.2. In a more particular embodiment, the pH of the beverage is about 3.3. One of skill in the art will understand that the pH of the beverage can vary based on the type of beverage. Dairy beverages, for example, can have pHs greater than 4.2.

The titratable acidity of a beverage may, for example, range from about 0.01% to about 1.0% by weight of beverage. In one embodiment, the titratable acidity of the beverage is about 0.18% (as citric acid).

The carbonation of a sparkling beverage/carbonated soft drink product has 0% to about 2% (w/w) of carbon dioxide or its equivalent, for example, from about 0.1% to about 1.0% (w/w).

The temperature of a beverage may, for example, range from about 4°C to about 100 °C, such as, for example, from about 4°C to about 25°C.

The beverage can be customized to provide the desired calorie content. For example, a beverage can be "full-calorie", i.e. have about 500 kJ (120 calories) per 237 mL (8 oz) serving. Alternatively, a beverage can be "mid-calorie", i.e. have less than about 250 kJ (60 calories) per 237 mL (8 oz) serving. In other embodiment, a beverage can be "low-calorie", i.e. have less than 170 kJ (40 calories) per 237 mL (8 oz) serving. In still other embodiments, the beverage can be "zero-calorie", i.e. have less than 21 kJ (5 calories) per 237 mL (8 oz) serving.

### Additives

The beverages of the present invention, described above, can optionally include additional additives, detailed herein below. In some embodiments, the beverage contains additives including, but not limited to, carbohydrates, polyols, amino acids and their corresponding salts, poly-amino acids and their corresponding salts, sugar acids and their corresponding salts, nucleotides, organic acids, inorganic acids, organic salts including organic acid salts and organic base salts, inorganic salts, bitter compounds, flavorants and flavoring ingredients, astringent compounds, proteins or protein hydrolysates, surfactants, emulsifiers, weighing agents, gums, antioxidants, colorants, flavonoids, alcohols, polymers and combinations thereof. In some embodiments, the additives act to improve the temporal and flavor profile of the beverage to provide a beverage with a taste similar to sucrose.

The beverages may further contain a least one additional sweetener. The additional sweetener can be any type of sweetener, for example, a natural, non-natural, or synthetic sweetener. In at least one embodiment, the at least one additional sweetener is chosen from natural sweeteners, synthetic high potency sweeteners or combinations thereof.

For example, the at least one additional sweetener may be a carbohydrate sweetener. Non-limiting examples of suitable carbohydrate sweeteners include sucrose, fructose, glucose, erythritol, maltitol, lactitol, sorbitol, mannitol, xylitol, tagatose, trehalose, galactose, rhamnose, cyclodextrin (e.g., α-cyclodextrin, β-cyclodextrin, and γ-cyclodextrin), ribulose, threose, arabinose, xylose, lyxose, allose, altrose, mannose, idose, lactose, maltose, invert sugar, isotrehalose, neotrehalose, palatinose or isomaltulose, erythrose, deoxyribose, gulose, idose, talose, erythrulose, xylulose, psicose, turanose, cellobiose, glucosamine, mannosamine, fucose, fuculose, glucuronic acid, gluconic acid, glucono-lactone, abequose, galactosamine, xylo-oligosaccharides (xylotriose, xylobiose and the like), gentio-oligoscaccharides (gentiobiose, gentiotriose, gentiotetraose and the like), galacto-oligosaccharides, sorbose, ketotriose (dehydroxyacetone), aldotriose (glyceraldehyde), nigero-oligosaccharides, fructooligosaccharides (kestose, nystose and the like), maltotetraose, maltotriol, tetrasaccharides, mannan-oligosaccharides, malto-oligosaccharides (maltotriose, maltotetraose, maltopentaose, maltohexaose, maltoheptaose and the like), dextrins, lactulose, melibiose, raffinose, rhamnose, ribose, isomerized liquid sugars such as high fructose corn/starch syrup (HFCS/HFSS) (e.g., HFCS55, HFCS42, or HFCS90), coupling sugars, soybean oligosaccharides, glucose syrup and combinations thereof. D- or L-configurations can be used when applicable.

In other embodiments, the additional sweetener is a carbohydrate sweetener selected from the group consisting of glucose, fructose, sucrose and combinations thereof.

In still other embodiments, the additional sweetener can be a natural high potency sweetener. Suitable natural high potency sweeteners include, but are not limited to, rebaudioside A, rebaudioside B, rebaudioside C, rebaudioside D, rebaudioside E, rebaudioside F, rebaudioside I, rebaudioside H, rebaudioside L, rebaudioside K, rebaudioside J, rebaudioside N, rebaudioside O, dulcoside A, dulcoside B, rubusoside, stevia, stevioside, mogroside IV, mogroside V, Luo Han Guo, siamenoside, monatin and its salts (monatin SS, RR, RS, SR), curculin, glycyrrhizic acid and its salts, thaumatin, monellin, mabinlin, brazzein, hernandulcin, phyllodulcin, glycyphyllin, phloridzin, trilobatin, baiyunoside, osladin, polypodoside A, pterocaryoside A, pterocaryoside B, mukurozioside, phlomisoside I, periandrin I, abrusoside A, steviolbioside and cyclocarioside I. The natural high potency sweetener can be provided as a pure compound or, alternatively, as part of an extract.

In still other embodiments, the additional sweetener can be chemically or enzymatically modified natural high potency sweetener. Modified natural high potency sweeteners include glycosylated natural high potency sweetener such as glucosyl-, galactosyl-, fructosyl- derivatives containing 1-50 glycosidic residues. Glycosylated natural high potency sweeteners may be prepared by enzymatic transglycosylation reaction catalyzed by various enzymes possessing transglycosylating activity.

In yet other embodiments, the at least one additional sweetener is a synthetic sweetener. As used herein, the phrase "synthetic sweetener" refers to any composition which is not found naturally in nature and characteristically has a sweetness potency greater than sucrose, fructose, or glucose, yet has less calories. Non-limiting examples of synthetic high-potency sweeteners suitable for embodiments of this disclosure include sucralose, potassium acesulfame, acesulfame acid and salts thereof, aspartame, alitame, saccharin and salts thereof, neohesperidin dihydrochalcone, cyclamate, cyclamic acid and salts thereof, neotame, advantame, glucosylated steviol glycosides (GSGs) and combinations thereof.

In one embodiment, the beverage contains one or more polyols. The term "polyol", as used herein, refers to a molecule that contains more than one hydroxyl group. A polyol may be a diol, triol, or a tetraol which contains 2, 3, and 4 hydroxyl groups respectively. A polyol also may contain more than 4 hydroxyl groups, such as a pentaol, hexaol, heptaol, or the like, which contain 5, 6, or 7 hydroxyl groups, respectively. Additionally, a polyol also may be a sugar alcohol, polyhydric alcohol, or polyalcohol which is a reduced form of carbohydrate, wherein the carbonyl group (aldehyde or ketone, reducing sugar) has been reduced to a primary or secondary hydroxyl group.

Non-limiting examples of polyols in some embodiments include erythritol, maltitol, mannitol, sorbitol, lactitol, xylitol, isomalt, propylene glycol, glycerol (glycerin), threitol, galactitol, palatinose, reduced isomalto-oligosaccharides, reduced xylo-oligosaccharides, reduced gentio-oligosaccharides, reduced maltose syrup, reduced glucose syrup, and sugar alcohols or any other carbohydrates capable of being reduced which do not adversely affect the taste of the beverage.

In certain embodiments, the polyol is present in the beverage in a concentration from about 100 ppm to about 250,000 ppm. In other embodiments, the polyol is present in the beverage in a concentration from about 400 ppm to about 80,000 ppm, such as, for example, from about 5,000 ppm to about 40,000 ppm.

Suitable amino acid additives include, but are not limited to, aspartic acid, arginine, glycine, glutamic acid, proline, threonine, theanine, cysteine, cystine, alanine, valine, tyrosine, leucine, arabinose, trans-4-hydroxyproline, isoleucine, asparagine, serine, lysine, histidine, ornithine, methionine, carnitine, aminobutyric acid (α-, β-, and/or δ-isomers), glutamine, hydroxyproline, taurine, norvaline, sarcosine, and their salt forms such as sodium or potassium salts or acid salts. The amino acid additives also may be in the D- or L-configuration and in the mono-, di-, or tri-form of the same or different amino acids. Additionally, the amino acids may be α-, β-, γ- and/or δ-isomers if appropriate. Combinations of the foregoing amino acids and their corresponding salts (*e*.*g*., sodium, potassium, calcium, magnesium salts or other alkali or alkaline earth metal salts thereof, or acid salts) also are suitable additives in some embodiments. The amino acids may be natural or synthetic. The amino acids also may be modified. Modified amino acids refers to any amino acid wherein at least one atom has been added, removed, substituted, or combinations thereof (*e*.*g*., N-alkyl amino acid, N-acyl amino acid, or N-methyl amino acid). Non-limiting examples of modified amino acids include amino acid derivatives such as trimethyl glycine, N-methyl-glycine, and N-methyl-alanine. As used herein, modified amino acids encompass both modified and unmodified amino acids. As used herein, amino acids also encompass both peptides and polypeptides (*e*.*g*., dipeptides, tripeptides, tetrapeptides, and pentapeptides) such as glutathione and L-alanyl-L-glutamine. Suitable polyamino acid additives include poly-L-aspartic acid, poly-L-lysine (*e*.*g*., poly-L-α-lysine or poly-L-ε-lysine), poly-L-ornithine (*e*.*g*., poly-L-α-ornithine or poly-L-ε-ornithine), poly-L-arginine, other polymeric forms of amino acids, and salt forms thereof (*e*.*g*., calcium, potassium, sodium, or magnesium salts such as L-glutamic acid mono sodium salt). The poly-amino acid additives also may be in the D- or L-configuration. Additionally, the poly-amino acids may be α-, β-, γ-, δ-, and ε-isomers if appropriate. Combinations of the foregoing poly-amino acids and their corresponding salts (*e*.*g*., sodium, potassium, calcium, magnesium salts or other alkali or alkaline earth metal salts thereof or acid salts) also are suitable additives in some embodiments. The poly-amino acids described herein also may comprise co-polymers of different amino acids. The poly-amino acids may be natural or synthetic. The poly-amino acids also may be modified, such that at least one atom has been added, removed, substituted, or combinations thereof (e.g., N-alkyl poly-amino acid or N-acyl poly-amino acid). As used herein, poly-amino acids encompass both modified and unmodified poly-amino acids. For example, modified poly-amino acids include, but are not limited to, poly-amino acids of various molecular weights (MW), such as poly-L-α-lysine with a MW of 1,500, MW of 6,000, MW of 25,200, MW of 63,000, MW of 83,000, or MW of 300,000.

In particular embodiments, the amino acid is present in the beverage in a concentration from about 10 ppm to about 50,000 ppm. In another embodiment, the amino acid is present in the beverage in a concentration from about 1,000 ppm to about 10,000 ppm, such as, for example, from about 2,500 ppm to about 5,000 ppm or from about 250 ppm to about 7,500 ppm.

Suitable sugar acid additives include, but are not limited to, aldonic, uronic, aldaric, alginic, gluconic, glucuronic, glucaric, galactaric, galacturonic, and salts thereof (e.g., sodium, potassium, calcium, magnesium salts or other physiologically acceptable salts), and combinations thereof.

Suitable nucleotide additives include, but are not limited to, inosine monophosphate ("IMP"), guanosine monophosphate ("GMP"), adenosine monophosphate ("AMP"), cytosine monophosphate (CMP), uracil monophosphate (UMP), inosine diphosphate, guanosine diphosphate, adenosine diphosphate, cytosine diphosphate, uracil diphosphate, inosine triphosphate, guanosine triphosphate, adenosine triphosphate, cytosine triphosphate, uracil triphosphate, alkali or alkaline earth metal salts thereof, and combinations thereof. The nucleotides described herein also may comprise nucleotide-related additives, such as nucleosides or nucleic acid bases (*e*.*g*., guanine, cytosine, adenine, thymine, uracil).

The nucleotide is present in the beverage in a concentration from about 5 ppm to about 1,000 ppm.

Suitable organic acid additives include any compound which comprises a -COOH moiety, such as, for example, C2-C30 carboxylic acids, substituted hydroxyl C2-C30 carboxylic acids, butyric acid (ethyl esters), substituted butyric acid (ethyl esters), benzoic acid, substituted benzoic acids (*e*.*g*., 2,4-dihydroxybenzoic acid), substituted cinnamic acids, hydroxyacids, substituted hydroxybenzoic acids, anisic acid substituted cyclohexyl carboxylic acids, tannic acid, aconitic acid, lactic acid, tartaric acid, citric acid, isocitric acid, gluconic acid, glucoheptonic acids, adipic acid, hydroxycitric acid, malic acid, fruitaric acid (a blend of malic, fumaric, and tartaric acids), fumaric acid, maleic acid, succinic acid, chlorogenic acid, salicylic acid, creatine, caffeic acid, bile acids, acetic acid, ascorbic acid, alginic acid, erythorbic acid, polyglutamic acid, glucono delta lactone, and their alkali or alkaline earth metal salt derivatives thereof. In addition, the organic acid additives also may be in either the D- or L-configuration.

Suitable organic acid additive salts include, but are not limited to, sodium, calcium, potassium, and magnesium salts of all organic acids, such as salts of citric acid, malic acid, tartaric acid, fumaric acid, lactic acid *(e.g.,* sodium lactate), alginic acid *(e.g.,* sodium alginate), ascorbic acid *(e.g.,* sodium ascorbate), benzoic acid *(e.g.,* sodium benzoate or potassium benzoate), sorbic acid and adipic acid. The examples of the organic acid additives described optionally may be substituted with at least one group chosen from hydrogen, alkyl, alkenyl, alkynyl, halo, haloalkyl, carboxyl, acyl, acyloxy, amino, amido, carboxyl derivatives, alkylamino, dialkylamino, arylamino, alkoxy, aryloxy, nitro, cyano, sulfo, thiol, imine, sulfonyl, sulfenyl, sulfinyl, sulfamyl, carboxalkoxy, carboxamido, phosphonyl, phosphinyl, phosphoryl, phosphino, thioester, thioether, anhydride, oximino, hydrazino, carbamyl, phosphor or phosphonato.

In particular embodiments, the organic acid additive is present in the beverage in a concentration from about 10 ppm to about 5,000 ppm.

Suitable inorganic acid additives include, but are not limited to, phosphoric acid, phosphorous acid, polyphosphoric acid, hydrochloric acid, sulfuric acid, carbonic acid, sodium dihydrogen phosphate, and alkali or alkaline earth metal salts thereof (*e*.*g*., inositol hexaphosphate Mg/Ca).

The inorganic acid additive is present in the beverage in a concentration from about 25 ppm to about 25,000 ppm.

Suitable bitter compound additives include, but are not limited to, caffeine, quinine, urea, bitter orange oil, naringin, quassia, and salts thereof.

The bitter compound is present in the beverage in a concentration from about 25 ppm to about 25,000 ppm.

Suitable flavorant and flavoring ingredient additives for include, but are not limited to, vanillin, vanilla extract, mango extract, cinnamon, citrus, coconut, ginger, viridiflorol, almond, menthol (including menthol without mint), grape skin extract, and grape seed extract. "Flavorant" and "flavoring ingredient" are synonymous and can include natural or synthetic substances or combinations thereof. Flavorants also include any other substance which imparts flavor and may include natural or non-natural (synthetic) substances which are safe for human or animals when used in a generally accepted range. Non-limiting examples of proprietary flavorants include Döhler™ Natural Flavoring Sweetness Enhancer K14323 (Döhler™, Darmstadt, Germany), Symrise™ Natural Flavor Mask for Sweeteners 161453 and 164126 (Symrise™, Holzminden, Germany), Natural Advantage™ Bitterness Blockers 1, 2, 9 and 10 (Natural Advantage™, Freehold, New Jersey, U.S.A.), and Sucramask™ (Creative Research Management, Stockton, California, U.S.A.).

The flavorant is present in the beverage in a concentration from about 0.1 ppm to about 4,000 ppm.

Suitable polymer additives include, but are not limited to, chitosan, pectin, pectic, pectinic, polyuronic, polygalacturonic acid, starch, food hydrocolloid or crude extracts thereof (e.g., gum acacia senegal (Fibergum™), gum acacia seyal, carageenan), poly-L-lysine (e.g., poly-L-α-lysine or poly-L-ε-lysine), poly-L-ornithine (e.g., poly-L-α-ornithine or poly-L-ε-ornithine), polypropylene glycol, polyethylene glycol, poly(ethylene glycol methyl ether), polyarginine, polyaspartic acid, polyglutamic acid, polyethylene imine, alginic acid, sodium alginate, propylene glycol alginate, and sodium polyethyleneglycolalginate, sodium hexametaphosphate and its salts, and other cationic polymers and anionic polymers.

The polymer is present in the beverage in a concentration from about 30 ppm to about 2,000 ppm.

Suitable protein or protein hydrolysate additives include, but are not limited to, bovine serum albumin (BSA), whey protein (including fractions or concentrates thereof such as 90% instant whey protein isolate, 34% whey protein, 50% hydrolyzed whey protein, and 80% whey protein concentrate), soluble rice protein, soy protein, protein isolates, protein hydrolysates, reaction products of protein hydrolysates, glycoproteins, and/or proteoglycans containing amino acids (e.g., glycine, alanine, serine, threonine, asparagine, glutamine, arginine, valine, isoleucine, leucine, norvaline, methionine, proline, tyrosine, hydroxyproline, and the like), collagen (e.g., gelatin), partially hydrolyzed collagen (e.g., hydrolyzed fish collagen), and collagen hydrolysates (e.g., porcine collagen hydrolysate).

The protein hydrosylate is present in the beverage in a concentration from about 200 ppm to about 50,000 ppm.

Suitable surfactant additives include, but are not limited to, polysorbates (e.g., polyoxyethylene sorbitan monooleate (polysorbate 80), polysorbate 20, polysorbate 60), sodium dodecylbenzenesulfonate, dioctyl sulfosuccinate or dioctyl sulfosuccinate sodium, sodium dodecyl sulfate, cetylpyridinium chloride (hexadecylpyridinium chloride), hexadecyltrimethylammonium bromide, sodium cholate, carbamoyl, choline chloride, sodium glycocholate, sodium taurodeoxycholate, lauric arginate, sodium stearoyl lactylate, sodium taurocholate, lecithins, sucrose oleate esters, sucrose stearate esters, sucrose palmitate esters, sucrose laurate esters, and other emulsifiers, and the like.

The surfactant additive is present in the beverage in a concentration from about 30 ppm to about 2,000 ppm.

Suitable flavonoid additives are classified as flavonols, flavones, flavanones, flavan-3-ols, isoflavones, or anthocyanidins. Non-limiting examples of flavonoid additives include, but are not limited to, catechins (e.g., green tea extracts such as Polyphenon™ 60, Polyphenon™ 30, and Polyphenon™ 25 (Mitsui Norin Co., Ltd., Japan), polyphenols, rutins (e.g., enzyme modified rutin Sanmelin™ AO (San-fi Gen F.F.I., Inc., Osaka, Japan)), neohesperidin, naringin, neohesperidin dihydrochalcone, and the like.

The flavonoid additive is present in the beverage in a concentration from about 0.1 ppm to about 1,000 ppm.

Suitable alcohol additives include, but are not limited to, ethanol. In particular embodiments, the alcohol additive is present in the beverage in a concentration from about 625 ppm to about 10,000 ppm.

Suitable astringent compound additives include, but are not limited to, tannic acid, europium chloride (EuCl₃), gadolinium chloride (GdCl₃), terbium chloride (TbCl₃), alum, tannic acid, and polyphenols (e.g., tea polyphenols).

The astringent additive is present in the beverage in a concentration from about 10 ppm to about 5,000 ppm.

### Functional Ingredients

The beverage can also contain one or more functional ingredients, which provide a real or perceived heath benefit to the composition. Functional ingredients include, but are not limited to, saponins, antioxidants, dietary fiber sources, fatty acids, vitamins, glucosamine, minerals, preservatives, hydration agents, probiotics, prebiotics, weight management agents, osteoporosis management agents, phytoestrogens, long chain primary aliphatic saturated alcohols, phytosterols and combinations thereof.

### Saponin

In certain embodiments, the functional ingredient is at least one saponin. As used herein, the at least one saponin may comprise a single saponin or a plurality of saponins as a functional ingredient for the beverages provided herein. Generally, according to particular embodiments of this invention, the at least one saponin is present in the beverage in a concentration sufficient to promote health and wellness.

Saponins are glycosidic natural plant products comprising an aglycone ring structure and one or more sugar moieties. The combination of the nonpolar aglycone and the water soluble sugar moiety gives saponins surfactant properties, which allow them to form a foam when shaken in an aqueous solution.

The saponins are grouped together based on several common properties. In particular, saponins are surfactants which display hemolytic activity and form complexes with cholesterol. Although saponins share these properties, they are structurally diverse. The types of aglycone ring structures forming the ring structure in saponins can vary greatly. Non-limiting examples of the types of aglycone ring structures in saponin for use in particular embodiments of the invention include steroids, triterpenoids, and steroidal alkaloids. Non-limiting examples of specific aglycone ring structures for use in particular embodiments of the invention include soyasapogenol A, soyasapogenol B and soyasopogenol E. The number and type of sugar moieties attached to the aglycone ring structure can also vary greatly. Non-limiting examples of sugar moieties for use in particular embodiments of the invention include glucose, galactose, glucuronic acid, xylose, rhamnose, and methylpentose moieties. Non-limiting examples of specific saponins for use in particular embodiments of the invention include group A acetyl saponin, group B acetyl saponin, and group E acetyl saponin.

Saponins can be found in a large variety of plants and plant products, and are especially prevalent in plant skins and barks where they form a waxy protective coating. Several common sources of saponins include soybeans, which have approximately 5% saponin content by dry weight, soapwort plants (*Saponaria*), the root of which was used historically as soap, as well as alfalfa, aloe, asparagus, grapes, chickpeas, yucca, and various other beans and weeds. Saponins may be obtained from these sources by using extraction techniques well known to those of ordinary skill in the art. A description of conventional extraction techniques can be found in U.S. Pat. Appl. No. 2005/0123662, the disclosure of which is expressly incorporated by reference.

### Antioxidant

In certain embodiments, the functional ingredient is at least one antioxidant. As used herein, the at least one antioxidant may comprise a single antioxidant or a plurality of antioxidants as a functional ingredient for the beverages provided herein. Generally, according to particular embodiments of this invention, the at least one antioxidant is present in the beverage in a concentration sufficient to promote health and wellness.

As used herein "antioxidant" refers to any substance which inhibits, suppresses, or reduces oxidative damage to cells and biomolecules. Without being bound by theory, it is believed that antioxidants inhibit, suppress, or reduce oxidative damage to cells or biomolecules by stabilizing free radicals before they can cause harmful reactions. As such, antioxidants may prevent or postpone the onset of some degenerative diseases.

Examples of suitable antioxidants for embodiments of this invention include, but are not limited to, vitamins, vitamin cofactors, minerals, hormones, carotenoids, carotenoid terpenoids, non-carotenoid terpenoids, flavonoids, flavonoid polyphenolics (e.g., bioflavonoids), flavonols, flavones, phenols, polyphenols, esters of phenols, esters of polyphenols, nonflavonoid phenolics, isothiocyanates, and combinations thereof. In some embodiments, the antioxidant is vitamin A, vitamin C, vitamin E, ubiquinone, mineral selenium, manganese, melatonin, α-carotene, β-carotene, lycopene, lutein, zeanthin, crypoxanthin, reservatol, eugenol, quercetin, catechin, gossypol, hesperetin, curcumin, ferulic acid, thymol, hydroxytyrosol, tumeric, thyme, olive oil, lipoic acid, glutathinone, gutamine, oxalic acid, tocopherol-derived compounds, butylated hydroxyanisole (BHA), butylated hydroxytoluene (BHT), ethylenediaminetetraacetic acid (EDTA), tert-butylhydroquinone, acetic acid, pectin, tocotrienol, tocopherol, coenzyme Q10, zeaxanthin, astaxanthin, canthaxantin, saponins, limonoids, kaempfedrol, myricetin, isorhamnetin, proanthocyanidins, quercetin, rutin, luteolin, apigenin, tangeritin, hesperetin, naringenin, erodictyol, flavan-3-ols (e.g., anthocyanidins), gallocatechins, epicatechin and its gallate forms, epigallocatechin and its gallate forms (ECGC) theaflavin and its gallate forms, thearubigins, isoflavone phytoestrogens, genistein, daidzein, glycitein, anythocyanins, cyaniding, delphinidin, malvidin, pelargonidin, peonidin, petunidin, ellagic acid, gallic acid, salicylic acid, rosmarinic acid, cinnamic acid and its derivatives (e.g., ferulic acid), chlorogenic acid, chicoric acid, gallotannins, ellagitannins, anthoxanthins, betacyanins and other plant pigments, silymarin, citric acid, lignan, antinutrients, bilirubin, uric acid, R-α-lipoic acid, N-acetylcysteine, emblicanin, apple extract, apple skin extract (applephenon), rooibos extract red, rooibos extract, green, hawthorn berry extract, red raspberry extract, green coffee antioxidant (GCA), aronia extract 20%, grape seed extract (VinOseed), cocoa extract, hops extract, mangosteen extract, mangosteen hull extract, cranberry extract, pomegranate extract, pomegranate hull extract, pomegranate seed extract, hawthorn berry extract, pomella pomegranate extract, cinnamon bark extract, grape skin extract, bilberry extract, pine bark extract, pycnogenol, elderberry extract, mulberry root extract, wolfberry (gogi) extract, blackberry extract, blueberry extract, blueberry leaf extract, raspberry extract, turmeric extract, citrus bioflavonoids, black currant, ginger, acai powder, green coffee bean extract, green tea extract, and phytic acid, or combinations thereof. In alternate embodiments, the antioxidant is a synthetic antioxidant such as butylated hydroxytolune or butylated hydroxyanisole, for example. Other sources of suitable antioxidants for embodiments of this invention include, but are not limited to, fruits, vegetables, tea, cocoa, chocolate, spices, herbs, rice, organ meats from livestock, yeast, whole grains, or cereal grains.

Particular antioxidants belong to the class of phytonutrients called polyphenols (also known as "polyphenolics"), which are a group of chemical substances found in plants, characterized by the presence of more than one phenol group per molecule. A variety of health benefits may be derived from polyphenols, including prevention of cancer, heart disease, and chronic inflammatory disease and improved mental strength and physical strength, for example. Suitable polyphenols for embodiments of this invention, include catechins, proanthocyanidins, procyanidins, anthocyanins, quercerin, rutin, reservatrol, isoflavones, curcumin, punicalagin, ellagitannin, hesperidin, naringin, citrus flavonoids, chlorogenic acid, other similar materials, and combinations thereof.

In particular embodiments, the antioxidant is a catechin such as, for example, epigallocatechin gallate (EGCG). Suitable sources of catechins for embodiments of this invention include, but are not limited to, green tea, white tea, black tea, oolong tea, chocolate, cocoa, red wine, grape seed, red grape skin, purple grape skin, red grape juice, purple grape juice, berries, pycnogenol, and red apple peel.

In some embodiments, the antioxidant is chosen from proanthocyanidins, procyanidins or combinations thereof. Suitable sources of proanthocyanidins and procyanidins for embodiments of this invention include, but are not limited to, red grapes, purple grapes, cocoa, chocolate, grape seeds, red wine, cacao beans, cranberry, apple peel, plum, blueberry, black currants, choke berry, green tea, sorghum, cinnamon, barley, red kidney bean, pinto bean, hops, almonds, hazelnuts, pecans, pistachio, pycnogenol, and colorful berries.

In particular embodiments, the antioxidant is an anthocyanin. Suitable sources of anthocyanins for embodiments of this invention include, but are not limited to, red berries, blueberries, bilberry, cranberry, raspberry, cherry, pomegranate, strawberry, elderberry, choke berry, red grape skin, purple grape skin, grape seed, red wine, black currant, red currant, cocoa, plum, apple peel, peach, red pear, red cabbage, red onion, red orange, and blackberries.

In some embodiments, the antioxidant is chosen from quercetin, rutin or combinations thereof. Suitable sources of quercetin and rutin for embodiments of this invention include, but are not limited to, red apples, onions, kale, bog whortleberry, lingonberrys, chokeberry, cranberry, blackberry, blueberry, strawberry, raspberry, black currant, green tea, black tea, plum, apricot, parsley, leek, broccoli, chili pepper, berry wine, and ginkgo.

In some embodiments, the antioxidant is resveratrol. Suitable sources of resveratrol for embodiments of this invention include, but are not limited to, red grapes, peanuts, cranberry, blueberry, bilberry, mulberry, Japanese Itadori tea, and red wine.

In particular embodiments, the antioxidant is an isoflavone. Suitable sources of isoflavones for embodiments of this invention include, but are not limited to, soy beans, soy products, legumes, alfalfa spouts, chickpeas, peanuts, and red clover.

In some embodiments, the antioxidant is curcumin. Suitable sources of curcumin for embodiments of this invention include, but are not limited to, turmeric and mustard.

In particular embodiments, the antioxidant is chosen from punicalagin, ellagitannin or combinations thereof. Suitable sources of punicalagin and ellagitannin for embodiments of this invention include, but are not limited to, pomegranate, raspberry, strawberry, walnut, and oak-aged red wine.

In some embodiments, the antioxidant is a citrus flavonoid, such as hesperidin or naringin. Suitable sources of citrus flavonids, such as hesperidin or naringin, for embodiments of this invention include, but are not limited to, oranges, grapefruits, and citrus juices.

In particular embodiments, the antioxidant is chlorogenic acid. Suitable sources of chlorogenic acid for embodiments of this invention include, but are not limited to, green coffee, yerba mate, red wine, grape seed, red grape skin, purple grape skin, red grape juice, purple grape juice, apple juice, cranberry, pomegranate, blueberry, strawberry, sunflower, Echinacea, pycnogenol, and apple peel.

### Dietary Fiber

In certain embodiments, the functional ingredient is at least one dietary fiber source.

As used herein, the at least one dietary fiber source may comprise a single dietary fiber source or a plurality of dietary fiber sources as a functional ingredient for the beverages provided herein. Generally, according to particular embodiments of this invention, the at least one dietary fiber source is present in the beverage in a concentration sufficient to promote health and wellness.

Numerous polymeric carbohydrates having significantly different structures in both composition and linkages fall within the definition of dietary fiber. Such compounds are well known to those skilled in the art, non-limiting examples of which include non-starch polysaccharides, lignin, cellulose, methylcellulose, the hemicelluloses, β-glucans, pectins, gums, mucilage, waxes, inulins, oligosaccharides, fructooligosaccharides, cyclodextrins, chitins, and combinations thereof.

Polysaccharides are complex carbohydrates composed of monosaccharides joined by glycosidic linkages. Non-starch polysaccharides are bonded with β-linkages, which humans are unable to digest due to a lack of an enzyme to break the β-linkages. Conversely, digestable starch polysaccharides generally comprise α(1-4) linkages.

Lignin is a large, highly branched and cross-linked polymer based on oxygenated phenylpropane units. Cellulose is a linear polymer of glucose molecules joined by a β(1-4) linkage, which mammalian amylases are unable to hydrolyze. Methylcellulose is a methyl esther of cellulose that is often used in foodstuffs as a thickener, and emulsifier. It is commercially available (e.g., Citrucel by GlaxoSmithKline, Celevac by Shire Pharmaceuticals). Hemicelluloses are highly branched polymers consisting mainly of glucurono- and 4-O-methylglucuroxylans. β-Glucans are mixed-linkage (1-3), (1-4) β-D-glucose polymers found primarily in cereals, such as oats and barley. Pectins, such as beta pectin, are a group of polysaccharides composed primarily of D-galacturonic acid, which is methoxylated to variable degrees.

Gums and mucilages represent a broad array of different branched structures. Guar gum, derived from the ground endosperm of the guar seed, is a galactomannan. Guar gum is commercially available (e.g., Benefiber by Novartis AG). Other gums, such as gum arabic and pectins, have still different structures. Still other gums include xanthan gum, gellan gum, tara gum, psylium seed husk gum, and locust been gum.

Waxes are esters of ethylene glycol and two fatty acids, generally occurring as a hydrophobic liquid that is insoluble in water.

Inulins comprise naturally occurring oligosaccharides belonging to a class of carbohydrates known as fructans. They generally are comprised of fructose units joined by β(2-1) glycosidic linkages with a terminal glucose unit. Oligosaccharides are saccharide polymers containing typically three to six component sugars. They are generally found either O- or N-linked to compatible amino acid side chains in proteins or to lipid molecules. Fructooligosaccharides are oligosaccharides consisting of short chains of fructose molecules.

Food sources of dietary fiber include, but are not limited to, grains, legumes, fruits, and vegetables. Grains providing dietary fiber include, but are not limited to, oats, rye, barley, wheat,. Legumes providing fiber include, but are not limited to, peas and beans such as soybeans. Fruits and vegetables providing a source of fiber include, but are not limited to, apples, oranges, pears, bananas, berries, tomatoes, green beans, broccoli, cauliflower, carrots, potatoes, celery. Plant foods such as bran, nuts, and seeds (such as flax seeds) are also sources of dietary fiber. Parts of plants providing dietary fiber include, but are not limited to, the stems, roots, leaves, seeds, pulp, and skin.

Although dietary fiber generally is derived from plant sources, indigestible animal products such as chitins are also classified as dietary fiber. Chitin is a polysaccharide composed of units of acetylglucosamine joined by β(1-4) linkages, similar to the linkages of cellulose.

Sources of dietary fiber often are divided into categories of soluble and insoluble fiber based on their solubility in water. Both soluble and insoluble fibers are found in plant foods to varying degrees depending upon the characteristics of the plant. Although insoluble in water, insoluble fiber has passive hydrophilic properties that help increase bulk, soften stools, and shorten transit time of fecal solids through the intestinal tract.

Unlike insoluble fiber, soluble fiber readily dissolves in water. Soluble fiber undergoes active metabolic processing via fermentation in the colon, increasing the colonic microflora and thereby increasing the mass of fecal solids. Fermentation of fibers by colonic bacteria also yields end-products with significant health benefits. For example, fermentation of the food masses produces gases and short-chain fatty acids. Acids produced during fermentation include butyric, acetic, propionic, and valeric acids that have various beneficial properties such as stabilizing blood glucose levels by acting on pancreatic insulin release and providing liver control by glycogen breakdown. In addition, fiber fermentation may reduce atherosclerosis by lowering cholesterol synthesis by the liver and reducing blood levels of LDL and triglycerides. The acids produced during fermentation lower colonic pH, thereby protecting the colon lining from cancer polyp formation. The lower colonic pH also increases mineral absorption, improves the barrier properties of the colonic mucosal layer, and inhibits inflammatory and adhesion irritants. Fermentation of fibers also may benefit the immune system by stimulating production of T-helper cells, antibodies, leukocytes, splenocytes, cytokinins and lymphocytes.

### Fatty Acid

In certain embodiments, the functional ingredient is at least one fatty acid.

As used herein, the at least one fatty acid may be single fatty acid or a plurality of fatty acids as a functional ingredient for the sweetener beverages provided herein. Generally, according to particular embodiments of this invention, the at least one fatty acid is present in the beverage in a concentration sufficient to promote health and wellness.

As used herein, "fatty acid" refers to any straight chain monocarboxylic acid and includes saturated fatty acids, unsaturated fatty acids, long chain fatty acids, medium chain fatty acids, short chain fatty acids, fatty acid precursors (including omega-9 fatty acid precursors), and esterified fatty acids. As used herein, "long chain polyunsaturated fatty acid" refers to any polyunsaturated carboxylic acid or organic acid with a long aliphatic tail. As used herein, "omega-3 fatty acid" refers to any polyunsaturated fatty acid having a first double bond as the third carbon-carbon bond from the terminal methyl end of its carbon chain. In particular embodiments, the omega-3 fatty acid may comprise a long chain omega-3 fatty acid. As used herein, "omega-6 fatty acid" any polyunsaturated fatty acid having a first double bond as the sixth carbon-carbon bond from the terminal methyl end of its carbon chain.

Suitable omega-3 fatty acids for use in embodiments of the present invention can be derived from algae, fish, animals, plants, or combinations thereof, for example. Examples of suitable omega-3 fatty acids include, but are not limited to, linolenic acid, alpha-linolenic acid, eicosapentaenoic acid, docosahexaenoic acid, stearidonic acid, eicosatetraenoic acid and combinations thereof. In some embodiments, suitable omega-3 fatty acids can be provided in fish oils, (e.g., menhaden oil, tuna oil, salmon oil, bonito oil, and cod oil), microalgae omega-3 oils or combinations thereof. In particular embodiments, suitable omega-3 fatty acids may be derived from commercially available omega-3 fatty acid oils such as Microalgae DHA oil (from Martek, Columbia, MD), OmegaPure (from Omega Protein, Houston, TX), Marinol C-38 (from Lipid Nutrition, Channahon, IL), Bonito oil and MEG-3 (from Ocean Nutrition, Dartmouth, NS), Evogel (from Symrise, Holzminden, Germany), Marine Oil, from tuna or salmon (from Arista Wilton, CT), OmegaSource 2000, Marine Oil, from menhaden and Marine Oil, from cod (from OmegaSource, RTP, NC).

Suitable omega-6 fatty acids include, but are not limited to, linoleic acid, gamma-linolenic acid, dihommo-gamma-linolenic acid, arachidonic acid, eicosadienoic acid, docosadienoic acid, adrenic acid, docosapentaenoic acid and combinations thereof.

Suitable esterified fatty acids for embodiments of the present invention may include, but are not limited to, monoacylgycerols containing omega-3 and/or omega-6 fatty acids, diacylgycerols containing omega-3 and/or omega-6 fatty acids, or triacylgycerols containing omega-3 and/or omega-6 fatty acids and combinations thereof.

### Vitamin

In certain embodiments, the functional ingredient is at least one vitamin. As used herein, the at least one vitamin may be single vitamin or a plurality of vitamins as a functional ingredient for the beverages provided herein. Generally, according to particular embodiments of this invention, the at least one vitamin is present in the beverage in a concentration sufficient to promote health and wellness.

Vitamins are organic compounds that the human body needs in small quantities for normal functioning. The body uses vitamins without breaking them down, unlike other nutrients such as carbohydrates and proteins. To date, thirteen vitamins have been recognized, and one or more can be used in the functional sweetener and sweetened compositions herein. Suitable vitamins include, vitamin A, vitamin D, vitamin E, vitamin K, vitamin B1, vitamin B2, vitamin B3, vitamin B5, vitamin B6, vitamin B7, vitamin B9, vitamin B12, and vitamin C. Many of vitamins also have alternative chemical names, non-limiting examples of which are provided below.

| **Vitamin** | **Alternative names** |
|---|---|
| Vitamin A | Retinol |
| | Retinaldehyde |
| | Retinoic acid |
| | Retinoids |
| | Retinal |
| | Retinoic ester |
| Vitamin D (vitamins D1-D5) | Calciferol |
| | Cholecalciferol |
| | Lumisterol |
| | Ergocalciferol |
| | Dihydrotachysterol |
| | 7-dehydrocholesterol |
| Vitamin E | Tocopherol |
| | Tocotrienol |
| Vitamin K | Phylloquinone |
| | Naphthoquinone |
| Vitamin B1 | Thiamin |
| Vitamin B2 | Riboflavin |
| | Vitamin G |
| Vitamin B3 | Niacin |
| | Nicotinic acid |
| | Vitamin PP |
| Vitamin B5 | Pantothenic acid |
| Vitamin B6 | Pyridoxine |
| | Pyridoxal |
| | Pyridoxamine |
| Vitamin B7 | Biotin |
| | Vitamin H |
| Vitamin B9 | Folic acid |
| | Folate |
| | Folacin |
| | Vitamin M |
| | Pteroyl-L-glutamic acid |
| Vitamin B12 | Cobalamin Cyanocobalamin |
| Vitamin C | Ascorbic acid |

Various other compounds have been classified as vitamins by some authorities. These compounds may be termed pseudo-vitamins and include, but are not limited to, compounds such as ubiquinone (coenzyme Q10), pangamic acid, dimethylglycine, taestrile, amygdaline, flavanoids, para-aminobenzoic acid, adenine, adenylic acid, and s-methylmethionine. As used herein, the term vitamin includes pseudo-vitamins.

In some embodiments, the vitamin is a fat-soluble vitamin chosen from vitamin A, D, E, K and combinations thereof.

In other embodiments, the vitamin is a water-soluble vitamin chosen from vitamin B1, vitamin B2, vitamin B3, vitamin B6, vitamin B12, folic acid, biotin, pantothenic acid, vitamin C and combinations thereof.

### Glucosamine

In certain embodiments, the functional ingredient is glucosamine. Generally, according to particular embodiments of this invention, glucosamine is present in the beverage in a concentration sufficient to promote health and wellness.

Glucosamine, also called chitosamine, is an amino sugar that is believed to be an important precursor in the biochemical synthesis of glycosylated proteins and lipids. D-glucosamine occurs naturally in the cartilage in the form of glucosamine-6-phosphate, which is synthesized from fructose-6-phosphate and glutamine. However, glucosamine also is available in other forms, non-limiting examples of which include glucosamine hydrochloride, glucosamine sulfate, N-acetyl-glucosamine, or any other salt forms or combinations thereof. Glucosamine may be obtained by acid hydrolysis of the shells of lobsters, crabs, shrimps, or prawns using methods well known to those of ordinary skill in the art. In a particular embodiment, glucosamine may be derived from fungal biomass containing chitin, as described in U.S. Patent Publication No. 2006/0172392.

The beverage can further comprise chondroitin sulfate.

### Mineral

In certain embodiments, the functional ingredient is at least one mineral.

As used herein, the at least one mineral may be single mineral or a plurality of minerals as a functional ingredient for the beverages provided herein. Generally, according to particular embodiments of this invention, the at least one mineral is present in the beverage in a concentration sufficient to promote health and wellness.

Minerals, in accordance with the teachings of this invention, comprise inorganic chemical elements required by living organisms. Minerals are comprised of a broad range of compositions (e.g., elements, simple salts, and complex silicates) and also vary broadly in crystalline structure. They may naturally occur in foods and beverages, may be added as a supplement, or may be consumed or administered separately from foods or beverages.

Minerals may be categorized as either bulk minerals, which are required in relatively large amounts, or trace minerals, which are required in relatively small amounts. Bulk minerals generally are required in amounts greater than or equal to about 100 mg per day and trace minerals are those that are required in amounts less than about 100 mg per day.

In particular embodiments of this invention, the mineral is chosen from bulk minerals, trace minerals or combinations thereof. Non-limiting examples of bulk minerals include calcium, chlorine, magnesium, phosphorous, potassium, sodium, and sulfur. Non-limiting examples of trace minerals include chromium, cobalt, copper, fluorine, iron, manganese, molybdenum, selenium, zinc, and iodine. Although iodine generally is classified as a trace mineral, it is required in larger quantities than other trace minerals and often is categorized as a bulk mineral.

In other particular embodiments of this invention, the mineral is a trace mineral, believed to be necessary for human nutrition, non-limiting examples of which include bismuth, boron, lithium, nickel, rubidium, silicon, strontium, tellurium, tin, titanium, tungsten, and vanadium.

The minerals embodied herein may be in any form known to those of ordinary skill in the art. For example, in a particular embodiment the minerals may be in their ionic form, having either a positive or negative charge. In another particular embodiment the minerals may be in their molecular form. For example, sulfur and phosphorous often are found naturally as sulfates, sulfides, and phosphates.

### Preservative

In certain embodiments, the functional ingredient is at least one preservative. As used herein, the at least one preservative may be single preservative or a plurality of preservatives as a functional ingredient for the beverages provided herein. Generally, according to particular embodiments of this invention, the at least one preservative is present in the beverage in a concentration sufficient to promote health and wellness.

In particular embodiments of this invention, the preservative is chosen from antimicrobials, antioxidants, antienzymatics or combinations thereof. Non-limiting examples of antimicrobials include sulfites, propionates, benzoates, sorbates, nitrates, nitrites, bacteriocins, salts, sugars, acetic acid, dimethyl dicarbonate (DMDC), ethanol, and ozone.

According to a particular embodiment, the preservative is a sulfite. Sulfites include, but are not limited to, sulfur dioxide, sodium bisulfite, and potassium hydrogen sulfite.

According to another particular embodiment, the preservative is a propionate. Propionates include, but are not limited to, propionic acid, calcium propionate, and sodium propionate.

According to yet another particular embodiment, the preservative is a benzoate. Benzoates include, but are not limited to, sodium benzoate and benzoic acid.

In another particular embodiment, the preservative is a sorbate. Sorbates include, but are not limited to, potassium sorbate, sodium sorbate, calcium sorbate, and sorbic acid.

In still another particular embodiment, the preservative is a nitrate and/or a nitrite. Nitrates and nitrites include, but are not limited to, sodium nitrate and sodium nitrite.

In yet another particular embodiment, the at least one preservative is a bacteriocin, such as, for example, nisin.

In another particular embodiment, the preservative is ethanol.

In still another particular embodiment, the preservative is ozone.

Non-limiting examples of antienzymatics suitable for use as preservatives in particular embodiments of the invention include ascorbic acid, citric acid, and metal chelating agents such as ethylenediaminetetraacetic acid (EDTA).

### Hydration Agent

In certain embodiments, the functional ingredient is at least one hydration agent. As used herein, the at least one hydration agent may be single hydration agent or a plurality of hydration agents as a functional ingredient for the beverages provided herein. Generally, according to particular embodiments of this invention, the at least one hydration agent is present in the beverage in a concentration sufficient to promote health and wellness.

Hydration products help the body to replace fluids that are lost through excretion. For example, fluid is lost as sweat in order to regulate body temperature, as urine in order to excrete waste substances, and as water vapor in order to exchange gases in the lungs. Fluid loss can also occur due to a wide range of external causes, non-limiting examples of which include physical activity, exposure to dry air, diarrhea, vomiting, hyperthermia, shock, blood loss, and hypotension. Diseases causing fluid loss include diabetes, cholera, gastroenteritis, shigellosis, and yellow fever. Forms of malnutrition that cause fluid loss include the excessive consumption of alcohol, electrolyte imbalance, fasting, and rapid weight loss.

In a particular embodiment, the hydration product is a composition that helps the body replace fluids that are lost during exercise. Accordingly, in a particular embodiment, the hydration product is an electrolyte, non-limiting examples of which include sodium, potassium, calcium, magnesium, chloride, phosphate, bicarbonate, and combinations thereof. Suitable electrolytes for use in particular embodiments of this invention are also described in U.S. Patent No. 5,681,569, the disclosure of which is expressly incorporated herein by reference. In particular embodiments, the electrolytes are obtained from their corresponding water-soluble salts. Non-limiting examples of salts for use in particular embodiments include chlorides, carbonates, sulfates, acetates, bicarbonates, citrates, phosphates, hydrogen phosphates, tartates, sorbates, citrates, benzoates, or combinations thereof. In other embodiments, the electrolytes are provided by juice, fruit extracts, vegetable extracts, tea, or teas extracts.

In particular embodiments of this invention, the hydration product is a carbohydrate to supplement energy stores burned by muscles. Suitable carbohydrates for use in particular embodiments of this invention are described in U.S. Patent Numbers 4,312,856, 4,853,237, 5,681,569, and 6,989,171, the disclosures of which are expressly incorporated herein by reference. Non-limiting examples of suitable carbohydrates include monosaccharides, disaccharides, oligosaccharides, complex polysaccharides or combinations thereof. Non-limiting examples of suitable types of monosaccharides for use in particular embodiments include trioses, tetroses, pentoses, hexoses, heptoses, octoses, and nonoses. Non-limiting examples of specific types of suitable monosaccharides include glyceraldehyde, dihydroxyacetone, erythrose, threose, erythrulose, arabinose, lyxose, ribose, xylose, ribulose, xylulose, allose, altrose, galactose, glucose, gulose, idose, mannose, talose, fructose, psicose, sorbose, tagatose, mannoheptulose, sedoheltulose, octolose, and sialose. Non-limiting examples of suitable disaccharides include sucrose, lactose, and maltose. Non-limiting examples of suitable oligosaccharides include saccharose, maltotriose, and maltodextrin. In other particular embodiments, the carbohydrates are provided by a corn syrup, a beet sugar, a cane sugar, a juice, or a tea.

In another particular embodiment, the hydration is a flavanol that provides cellular rehydration. Flavanols are a class of natural substances present in plants, and generally comprise a 2-phenylbenzopyrone molecular skeleton attached to one or more chemical moieties. Non-limiting examples of suitable flavanols for use in particular embodiments of this invention include catechin, epicatechin, gallocatechin, epigallocatechin, epicatechin gallate, epigallocatechin 3-gallate, theaflavin, theaflavin 3-gallate, theaflavin 3'-gallate, theaflavin 3,3' gallate, thearubigin or combinations thereof. Several common sources of flavanols include tea plants, fruits, vegetables, and flowers. In preferred embodiments, the flavanol is extracted from green tea.

In a particular embodiment, the hydration product is a glycerol solution to enhance exercise endurance. The ingestion of a glycerol containing solution has been shown to provide beneficial physiological effects, such as expanded blood volume, lower heart rate, and lower rectal temperature.

### Probiotics/Prebiotics

In certain embodiments, the functional ingredient is chosen from at least one probiotic, prebiotic and combination thereof. As used herein, the at least one probiotic or prebiotic may be single probiotic or prebiotic or a plurality of probiotics or prebiotics as a functional ingredient for the beverages provided herein. Generally, according to particular embodiments of this invention, the at least one probiotic, prebiotic or combination thereof is present in the beverage in a concentration sufficient to promote health and wellness.

Probiotics, in accordance with the teachings of this invention, comprise microorganisms that benefit health when consumed in an effective amount. Desirably, probiotics beneficially affect the human body's naturally-occurring gastrointestinal microflora and impart health benefits apart from nutrition. Probiotics may include, without limitation, bacteria, yeasts, and fungi.

According to particular embodiments, the probiotic is a beneficial microorganisms that beneficially affects the human body's naturally-occurring gastrointestinal microflora and imparts health benefits apart from nutrition. Examples of probiotics include, but are not limited to, bacteria of the genus *Lactobacilli*, *Bifidobacteria*, *Streptococci*, or combinations thereof, that confer beneficial effects to humans.

In particular embodiments of the invention, the at least one probiotic is chosen from the genus *Lactobacilli. Lactobacilli* (i.e., bacteria of the genus *Lactobacillus*, hereinafter "*L.*") have been used for several hundred years as a food preservative and for promoting human health. Non-limiting examples of species of *Lactobacilli* found in the human intestinal tract include *L. acidophilus, L. casei, L. fermentum, L. saliva roes, L. brevis, L. leichmannii, L. plantarum, L. cellobiosus, L. reuteri, L. rhamnosus, L. GG, L. bulgaricus,* and *L*. *thermophilus,.*

According to other particular embodiments of this invention, the probiotic is chosen from the genus *Bifidobacteria. Bifidobacteria* also are known to exert a beneficial influence on human health by producing short chain fatty acids (e.g., acetic, propionic, and butyric acids), lactic, and formic acids as a result of carbohydrate metabolism. Non-limiting species of *Bifidobacteria* found in the human gastrointestinal tract include *B. angulatum, B. animalis, B. asteroides, B. bifidum, B. boum, B. breve, B. catenulatum, B. choerinum, B. coryneforme, B. cuniculi, B. dentium, B. gallicum, B. gallinarum, B indicum, B. longum, B. magnum, B. merycicum, B. minimum, B. pseudocatenulatum, B. pseudolongum, B. psychraerophilum, B. pullorum, B. ruminantium, B. saeculare, B. scardovii, B. simiae, B. subtile, B. thermacidophilum, B. thermophilum, B. urinalis, and B. sp.*

According to other particular embodiments of this invention, the probiotic is chosen from the genus *Streptococcus. Streptococcus thermophilus* is a gram-positive facultative anaerobe. It is classified as a lactic acid bacteria and commonly is found in milk and milk products, and is used in the production of yogurt. Other non-limiting probiotic species of this bacteria include *Streptococcus salivarus* and *Streptococcus cremoris.*

Probiotics that may be used in accordance with this invention are well-known to those of skill in the art. Non-limiting examples of foodstuffs comprising probiotics include yogurt, sauerkraut, kefir, kimchi, fermented vegetables, and other foodstuffs containing a microbial element that beneficially affects the host animal by improving the intestinal microbalance.

Prebiotics, in accordance with the teachings of this invention, are compositions that promote the growth of beneficial bacteria in the intestines. Prebiotic substances can be consumed by a relevant probiotic, or otherwise assist in keeping the relevant probiotic alive or stimulate its growth. When consumed in an effective amount, prebiotics also beneficially affect the human body's naturally-occurring gastrointestinal microflora and thereby impart health benefits apart from just nutrition. Prebiotic foods enter the colon and serve as substrate for the endogenous bacteria, thereby indirectly providing the host with energy, metabolic substrates, and essential micronutrients. The body's digestion and absorption of prebiotic foods is dependent upon bacterial metabolic activity, which salvages energy for the host from nutrients that escaped digestion and absorption in the small intestine.

Prebiotics, in accordance with the embodiments of this invention, include, without limitation, mucopolysaccharides, oligosaccharides, polysaccharides, amino acids, vitamins, nutrient precursors, proteins and combinations thereof.

According to a particular embodiment of this invention, the prebiotic is chosen from dietary fibers, including, without limitation, polysaccharides and oligosaccharides. These compounds have the ability to increase the number of probiotics, which leads to the benefits conferred by the probiotics. Non-limiting examples of oligosaccharides that are categorized as prebiotics in accordance with particular embodiments of this invention include fructooligosaccharides, inulins, isomalto-oligosaccharides, lactilol, lactosucrose, lactulose, pyrodextrins, soy oligosaccharides, transgalacto-oligosaccharides, and xylo-oligosaccharides.

According to other particular embodiments of the invention, the prebiotic is an amino acid. Although a number of known prebiotics break down to provide carbohydrates for probiotics, some probiotics also require amino acids for nourishment.

Prebiotics are found naturally in a variety of foods including, without limitation, bananas, berries, asparagus, garlic, wheat, oats, barley (and other whole grains), flaxseed, tomatoes, Jerusalem artichoke, onions and chicory, greens (e.g., dandelion greens, spinach, collard greens, chard, kale, mustard greens, turnip greens), and legumes (e.g., lentils, kidney beans, chickpeas, navy beans, white beans, black beans).

### Weight Management Agent

In certain embodiments, the functional ingredient is at least one weight management agent. As used herein, the at least one weight management agent may be single weight management agent or a plurality of weight management agents as a functional ingredient for the beverages provided herein. Generally, according to particular embodiments of this invention, the at least one weight management agent is present in the beverage in a concentration sufficient to promote health and wellness.

As used herein, "a weight management agent" includes an appetite suppressant and/or a thermogenesis agent. As used herein, the phrases "appetite suppressant", "appetite satiation compositions", "satiety agents", and "satiety ingredients" are synonymous. The phrase "appetite suppressant" describes macronutrients, herbal extracts, exogenous hormones, anorectics, anorexigenics, pharmaceutical drugs, and combinations thereof, that when delivered in an effective amount, suppress, inhibit, reduce, or otherwise curtail a person's appetite. The phrase "thermogenesis agent" describes macronutrients, herbal extracts, exogenous hormones, anorectics, anorexigenics, pharmaceutical drugs, and combinations thereof, that when delivered in an effective amount, activate or otherwise enhance a person's thermogenesis or metabolism.

Suitable weight management agents include macronutrient selected from the group consisting of proteins, carbohydrates, dietary fats, and combinations thereof. Consumption of proteins, carbohydrates, and dietary fats stimulates the release of peptides with appetite-suppressing effects. For example, consumption of proteins and dietary fats stimulates the release of the gut hormone cholecytokinin (CCK), while consumption of carbohydrates and dietary fats stimulates release of Glucagon-like peptide 1 (GLP-1).

Suitable macro nutrient weight management agents also include carbohydrates. Carbohydrates generally comprise sugars, starches, cellulose and gums that the body converts into glucose for energy. Carbohydrates often are classified into two categories, digestible carbohydrates (e.g., monosaccharides, disaccharides, and starch) and non-digestible carbohydrates (e.g., dietary fiber). Studies have shown that non-digestible carbohydrates and complex polymeric carbohydrates having reduced absorption and digestibility in the small intestine stimulate physiologic responses that inhibit food intake. Accordingly, the carbohydrates embodied herein desirably comprise non-digestible carbohydrates or carbohydrates with reduced digestibility. Non-limiting examples of such carbohydrates include polydextrose; inulin; monosaccharide-derived polyols such as erythritol, mannitol, xylitol, and sorbitol; disaccharide-derived alcohols such as isomalt, lactitol, and maltitol; and hydrogenated starch hydrolysates. Carbohydrates are described in more detail herein below.

In another particular embodiment weight management agent is a dietary fat. Dietary fats are lipids comprising combinations of saturated and unsaturated fatty acids. Polyunsaturated fatty acids have been shown to have a greater satiating power than mono-unsaturated fatty acids. Accordingly, the dietary fats embodied herein desirably comprise poly-unsaturated fatty acids, non-limiting examples of which include triacylglycerols.

In a particular embodiment, the weight management agents is an herbal extract. Extracts from numerous types of plants have been identified as possessing appetite suppressant properties. Non-limiting examples of plants whose extracts have appetite suppressant properties include plants of the genus *Hoodia*, *Trichocaulon*, *Caralluma*, *Stapelia*, *Orbea*, *Asclepias*, and *Camelia.* Other embodiments include extracts derived from Gymnema Sylvestre, Kola Nut, Citrus Auran tium, Yerba Mate, Griffonia Simplicifolia, Guarana, myrrh, guggul Lipid, and black current seed oil.

The herbal extracts may be prepared from any type of plant material or plant biomass. Non-limiting examples of plant material and biomass include the stems, roots, leaves, dried powder obtained from the plant material, and sap or dried sap. The herbal extracts generally are prepared by extracting sap from the plant and then spray-drying the sap. Alternatively, solvent extraction procedures may be employed. Following the initial extraction, it may be desirable to further fractionate the initial extract (e.g., by column chromatography) in order to obtain an herbal extract with enhanced activity. Such techniques are well known to those of ordinary skill in the art.

In a particular embodiment, the herbal extract is derived from a plant of the genus *Hoodia,* species of which include *H. alstonii*, *H. currorii*, *H. dregei*, *H. flava*, *H. gordonii*, *H. jutatae, H. mossamedensis*, *H. officinalis, H. parviflorai*, *H. pedicellata*, *H. pilifera*, *H. ruschii,* and *H. triebneri. Hoodia* plants are stem succulents native to southern Africa. A sterol glycoside of *Hoodia,* known as P57, is believed to be responsible for the appetite-suppressant effect of the *Hoodia* species.

In another particular embodiment, the herbal extract is derived from a plant of the genus *Caralluma,* species of which include *C*. *indica, C. fimbriata, C. attenuate, C. tuberculata, C*. *edulis, C. adscendens, C. stalagmifera, C. umbellate, C. penicillata, C. russeliana, C. retrospicens*, *C. Arabica*, and *C*. *lasiantha. Carralluma* plants belong to the same Subfamily as *Hoodia,* Asclepiadaceae. *Caralluma* are small, erect and fleshy plants native to India having medicinal properties, such as appetite suppression, that generally are attributed to glycosides belonging to the pregnane group of glycosides, non-limiting examples of which include caratuberside A, caratuberside B, bouceroside I, bouceroside II, bouceroside III, bouceroside IV, bouceroside V, bouceroside VI, bouceroside VII, bouceroside VIII, bouceroside IX, and bouceroside X.

In another particular embodiment, the at least one herbal extract is derived from a plant of the genus *Trichocaulon. Trichocaulon* plants are succulents that generally are native to southern Africa, similar to *Hoodia,* and include the species *T. piliferum* and *T. officinale.*

In another particular embodiment, the herbal extract is derived from a plant of the genus *Stapelia* or *Orbea,* species of which include *S. gigantean* and *O*. *variegate,* respectively. Both *Stapelia* and *Orbea* plants belong to the same Subfamily as *Hoodia,* Asclepiadaceae. Not wishing to be bound by any theory, it is believed that the compounds exhibiting appetite suppressant activity are saponins, such as pregnane glycosides, which include stavarosides A, B, C, D, E, F, G, H, I, J, and K.

In another particular embodiment, the herbal extract is derived from a plant of the genus *Asclepias. Asclepias* plants also belong to the Asclepiadaceae family of plants. Non-limiting examples of *Asclepias* plants include *A. incarnate, A. curassayica, A. syriaca,* and *A. tuberose.* Not wishing to be bound by any theory, it is believed that the extracts comprise steroidal compounds, such as pregnane glycosides and pregnane aglycone, having appetite suppressant effects.

In a particular embodiment, the weight management agent is an exogenous hormone having a weight management effect. Non-limiting examples of such hormones include CCK, peptide YY, ghrelin, bombesin and gastrin-releasing peptide (GRP), enterostatin, apolipoprotein A-IV, GLP-1, amylin, somastatin, and leptin.

In another embodiment, the weight management agent is a pharmaceutical drug. Non-limiting examples include phentenime, diethylpropion, phendimetrazine, sibutramine, rimonabant, oxyntomodulin, floxetine hydrochloride, ephedrine, phenethylamine, or other stimulants.

The at least one weight management agent may be utilized individually or in combination as a functional ingredient for the beverages provided in this invention.

### Osteoporosis Management Agent

In certain embodiments, the functional ingredient is at least one osteoporosis management agent. As used herein, the at least one osteoporosis management agent may be single osteoporosis management agent or a plurality of osteoporosis management agent as a functional ingredient for the beverages provided herein. Generally, according to particular embodiments of this invention, the at least one osteoporosis management agent is present in the beverage in a concentration sufficient to promote health and wellness.

Osteoporosis is a skeletal disorder of compromised bone strength, resulting in an increased risk of bone fracture. Generally, osteoporosis is characterized by reduction of the bone mineral density (BMD), disruption of bone micro-architecture, and changes to the amount and variety of non-collagenous proteins in the bone.

In certain embodiments, the osteoporosis management agent is at least one calcium source. According to a particular embodiment, the calcium source is any compound containing calcium, including salt complexes, solubilized species, and other forms of calcium. Non-limiting examples of calcium sources include amino acid chelated calcium, calcium carbonate, calcium oxide, calcium hydroxide, calcium sulfate, calcium chloride, calcium phosphate, calcium hydrogen phosphate, calcium dihydrogen phosphate, calcium citrate, calcium malate, calcium citrate malate, calcium gluconate, calcium tartrate, calcium lactate, solubilized species thereof, and combinations thereof.

According to a particular embodiment, the osteoporosis management agent is a magnesium soucrce. The magnesium source is any compound containing magnesium, including salt complexes, solubilized species, and other forms of magnesium. Non-limiting examples of magnesium sources include magnesium chloride, magnesium citrate, magnesium gluceptate, magnesium gluconate, magnesium lactate, magnesium hydroxide, magnesium picolate, magnesium sulfate, solubilized species thereof, and mixtures thereof. In another particular embodiment, the magnesium source comprises an amino acid chelated or creatine chelated magnesium.

In other embodiments, the osteoporosis agent is chosen from vitamins D, C, K, their precursors and/or beta-carotene and combinations thereof.

Numerous plants and plant extracts also have been identified as being effective in the prevention and treatment of osteoporosis. Not wishing to be bound by any theory, it is believed that the plants and plant extracts stimulates bone morphogenic proteins and/or inhibits bone resorption, thereby stimulating bone regeneration and strength. Non-limiting examples of suitable plants and plant extracts as osteoporosis management agents include species of the genus *Taraxacum* and *Amelanchier,* as disclosed in U.S. Patent Publication No. 2005/0106215, and species of the genus *Lindera*, *Artemisia*, *Acorus*, *Carthamus*, *Carum*, *Cnidium*, *Curcuma*, *Cyperus*, *Juniperus*, *Prunus*, *Iris*, *Cichorium*, *Dodonaea*, *Epimedium*, *Erigonoum, Soya, Mentha, Ocimum, thymus, Tanacetum, Plantago, Spearmint, Bixa, Vitis, Rosemarinus, Rhus,* and *Anethum,* as disclosed in U.S. Patent Publication No. 2005/0079232.

### Phytoestrogen

In certain embodiments, the functional ingredient is at least one phytoestrogen. As used herein, the at least one phytoestrogen may be single phytoestrogen or a plurality of phytoestrogens as a functional ingredient for the beverages provided herein. Generally, according to particular embodiments of this invention, the at least one phytoestrogen is present in the beverages in a concentration sufficient to promote health and wellness.

Phytoestrogens are compounds found in plants which can typically be delivered into human bodies by ingestion of the plants or the plant parts having the phytoestrogens. As used herein, "phytoestrogen" refers to any substance which, when introduced into a body causes an estrogen-like effect of any degree. For example, a phytoestrogen may bind to estrogen receptors within the body and have a small estrogen-like effect.

Examples of suitable phytoestrogens for embodiments of this invention include, but are not limited to, isoflavones, stilbenes, lignans, resorcyclic acid lactones, coumestans, coumestroI, equol, and combinations thereof. Sources of suitable phytoestrogens include, but are not limited to, whole grains, cereals, fibers, fruits, vegetables, black cohosh, agave root, black currant, black haw, chasteberries, cramp bark, dong quai root, devil's club root, false unicorn root, ginseng root, groundsel herb, licorice, liferoot herb, motherwort herb, peony root, raspberry leaves, rose family plants, sage leaves, sarsaparilla root, saw palmetto berried, wild yam root, yarrow blossoms, legumes, soybeans, soy products (e.g., miso, soy flour, soymilk, soy nuts, soy protein isolate, tempen, or tofu) chick peas, nuts, lentils, seeds, clover, red clover, dandelion leaves, dandelion roots, fenugreek seeds, green tea, hops, red wine, flaxseed, garlic, onions, linseed, borage, butterfly weed, caraway, chaste tree, vitex, dates, dill, fennel seed, gotu kola, milk thistle, pennyroyal, pomegranates, southernwood, soya flour, tansy, and root of the kudzu vine (pueraria root) and the like, and combinations thereof.

Isoflavones belong to the group of phytonutrients called polyphenols. In general, polyphenols (also known as "polyphenolics"), are a group of chemical substances found in plants, characterized by the presence of more than one phenol group per molecule.

Suitable phytoestrogen isoflavones in accordance with embodiments of this invention include genistein, daidzein, glycitein, biochanin A, formononetin, their respective naturally occurring glycosides and glycoside conjugates, matairesinol, secoisolariciresinol, enterolactone, enterodiol, textured vegetable protein, and combinations thereof.

Suitable sources of isoflavones for embodiments of this invention include, but are not limited to, soy beans, soy products, legumes, alfalfa spouts, chickpeas, peanuts, and red clover.

### Long-Chain Primary Aliphatic Saturated Alcohol

In certain embodiments, the functional ingredient is at least one long chain primary aliphatic saturated alcohol. As used herein, the at least one long chain primary aliphatic saturated alcohol may be single long chain primary aliphatic saturated alcohol or a plurality of long chain primary aliphatic saturated alcohols as a functional ingredient for the beverages provided herein. Generally, according to particular embodiments of this invention, the at least one long chain primary aliphatic saturated alcohol is present in the beverage in a concentration sufficient to promote health and wellness.

Long-chain primary aliphatic saturated alcohols are a diverse group of organic compounds. The term alcohol refers to the fact these compounds feature a hydroxyl group (-OH) bound to a carbon atom. The term primary refers to the fact that in these compounds the carbon atom which is bound to the hydroxyl group is bound to only one other carbon atom. The term saturated refers to the fact that these compounds feature no carbon to carbon pi bonds. The term aliphatic refers to the fact that the carbon atoms in these compounds are joined together in straight or branched chains rather than in rings. The term long-chain refers to the fact that the number of carbon atoms in these compounds is at least 8 carbons).

Non-limiting examples of particular long-chain primary aliphatic saturated alcohols for use in particular embodiments of the invention include the 8 carbon atom 1-octanol, the 9 carbon 1-nonanol, the 10 carbon atom 1-decanol, the 12 carbon atom 1-dodecanol, the 14 carbon atom 1-tetradecanol, the 16 carbon atom 1-hexadecanol, the 18 carbon atom 1-octadecanol, the 20 carbon atom 1-eicosanol, the 22 carbon 1-docosanol, the 24 carbon 1-tetracosanol, the 26 carbon 1-hexacosanol, the 27 carbon 1-heptacosanol, the 28 carbon 1-octanosol, the 29 carbon 1-nonacosanol, the 30 carbon 1-triacontanol, the 32 carbon 1-dotriacontanol, and the 34 carbon 1-tetracontanol.

In a particularly desirable embodiment of the invention, the long-chain primary aliphatic saturated alcohols are policosanol. Policosanol is the term for a mixture of long-chain primary aliphatic saturated alcohols composed primarily of 28 carbon 1-octanosol and 30 carbon 1-triacontanol, as well as other alcohols in lower concentrations such as 22 carbon 1-docosanol, 24 carbon 1-tetracosanol, 26 carbon 1-hexacosanol, 27 carbon 1-heptacosanol, 29 carbon 1-nonacosanol, 32 carbon 1-dotriacontanol, and 34 carbon 1-tetracontanol.

Long-chain primary aliphatic saturated alcohols are derived from natural fats and oils. They may be obtained from these sources by using extraction techniques well known to those of ordinary skill in the art. Policosanols can be isolated from a variety of plants and materials including sugar cane *(Saccharum officinarium),* yams *(e.g. Dioscorea opposite),* bran from rice *(e.g. Oryza sativa),* and beeswax. Policosanols may be obtained from these sources by using extraction techniques well known to those of ordinary skill in the art. A description of such extraction techniques can be found in U.S. Pat. Appl. No. 2005/0220868*,* the disclosure of which is expressly incorporated by reference.

### Phytosterols

In certain embodiments, the functional ingredient is at least one phytosterol, phytostanol or combination thereof. Generally, according to particular embodiments of this invention, the at least one phytosterol, phytostanol or combination thereof is present in the beverage in a concentration sufficient to promote health and wellness.

As used herein, the phrases "stanol", "plant stanol" and "phytostanol" are synonymous.

Plant sterols and stanols are present naturally in small quantities in many fruits, vegetables, nuts, seeds, cereals, legumes, vegetable oils, bark of the trees and other plant sources. Although people normally consume plant sterols and stanols every day, the amounts consumed are insufficient to have significant cholesterol-lowering effects or other health benefits. Accordingly, it would be desirable to supplement food and beverages with plant sterols and stanols.

Sterols are a subgroup of steroids with a hydroxyl group at C-3. Generally, phytosterols have a double bond within the steroid nucleus, like cholesterol; however, phytosterols also may comprise a substituted sidechain (R) at C-24, such as an ethyl or methyl group, or an additional double bond. The structures of phytosterols are well known to those of skill in the art.

At least 44 naturally-occurring phytosterols have been discovered, and generally are derived from plants, such as corn, soy, wheat, and wood oils; however, they also may be produced synthetically to form compositions identical to those in nature or having properties similar to those of naturally-occurring phytosterols. According to particular embodiments of this invention, non-limiting examples of phytosterols well known to those or ordinary skill in the art include 4-desmethylsterols (e.g., β-sitosterol, campesterol, stigmasterol, brassicasterol, 22-dehydrobrassicasterol, and Δ5-avenasterol), 4-monomethyl sterols, and 4,4-dimethyl sterols (triterpene alcohols) (e.g., cycloartenol, 24-methylenecycloartanol, and cyclobranol).

As used herein, the phrases "stanol", "plant stanol" and "phytostanol" are synonymous. Phytostanols are saturated sterol alcohols present in only trace amounts in nature and also may be synthetically produced, such as by hydrogenation of phytosterols. According to particular embodiments of this invention, non-limiting examples of phytostanols include β-sitostanol, campestanol, cycloartanol, and saturated forms of other triterpene alcohols.

Both phytosterols and phytostanols, as used herein, include the various isomers such as the α and β isomers (e.g., α-sitosterol and β-sitostanol, which comprise one of the most effective phytosterols and phytostanols, respectively, for lowering serum cholesterol in mammals).

The phytosterols and phytostanols of the present invention also may be in their ester form. Suitable methods for deriving the esters of phytosterols and phytostanols are well known to those of ordinary skill in the art, and are disclosed in U.S. Patent Numbers 6,589,588, 6,635,774, 6,800,317, and U.S. Patent Publication Number 2003/0045473, the disclosures of which are incorporated herein by reference in their entirety. Non-limiting examples of suitable phytosterol and phytostanol esters include sitosterol acetate, sitosterol oleate, stigmasterol oleate, and their corresponding phytostanol esters. The phytosterols and phytostanols of the present invention also may include their derivatives.

Generally, the amount of functional ingredient in the beverage varies widely depending on the particular beverage and the desired functional ingredient. Those of ordinary skill in the art will readily acertain the appropriate amount of functional ingredient for each beverage.

### EXAMPLES

### EXAMPLE 1: Sweetness Enhancement of Beverages Containing D-Psicose by Rebaudioside C [reference example]

### Beverage Preparation

Beverages were prepared with the following ingredients:

**Table 1:**

| D-Psicose in Citric Acid/Potassium Citrate Buffer | |
|---|---|
| **Ingredient** | **Amount** |
| Citric Acid | 0.18 g |
| Potassium Citrate | 0.06 g |
| D-psicose | 2.0 g |
| Water | 97.76 g |
| **TOTAL** | **100 g** |

**Table 2:**

| D-Psicose and Rebaudioside C in Citric Acid/Potassium Citrate Buffer | |
|---|---|
| **Ingredient** | **Amount** |
| Citric Acid | 0.18 g |
| Potassium Citrate | 0.06 g |
| Rebaudioside C | 0.022 g |
| D-Psicose | 2.0 g |
| Water | 97.74 g |
| **TOTAL** | **100 g** |

**Table 3:**

| D-Psicose in Lemon-Lime Carbonated Soft Drink | |
|---|---|
| **Ingredient** | **Amount** |
| Citric Acid | 0.18 g |
| Potassium Citrate | 0.06 g |
| D-Psicose | 2.0 g |
| Lemon lime flavor | 0.1 g |
| Water | 97.62 g |
| **TOTAL** | **100 g** |

**Table 4:**

| D-Psicose and Rebaudioside C in Lemon-Lime Carbonated Soft Drink | |
|---|---|
| **Ingredient** | **Amount** |
| Citric Acid | 0.18 g |
| Potassium Citrate | 0.06 g |
| Rebaudioside C | 0.22 g |
| D-Psicose | 2.0 g |
| Lemon lime flavor | 0.1 g |
| Water | 97.64 g |
| **TOTAL** | **100 g** |

**Table 5**

| 1% Sucrose in Citric Acid/Potassium Citrate Buffer* | |
|---|---|
| **Ingredient** | **Amount** |
| Citric Acid | 0.18 g |
| Potassium Citrate | 0.06 g |
| Sucrose | 1.0 g |
| Water | 98.76 g |
| **TOTAL** | **100 g** |

| | |
|---|---|
| * 1.5% sucrose solution was made using 1.5 g sucrose; 2.0% sucrose solution was made using 2.0 g sucrose | |

For beverages with the citric acid/potassium citrate buffer, the ingredients were added to treated water while stirring until solids were visibly dissolved. Afterwards, the pH, Brix and titratable acidity were measured (see Table 6) and the beverage was poured into a glass bottle and stored at 4°C.

For lemon-lime carbonated soft drink beverages, the ingredients were added to treated water sufficient to constitute a syrup. 5.5 parts of carbonated water was then added to 1 part of the syrup to constitute a finished beverage with a carbonation of 3.7 volumes of carbon dioxide Afterwards, the pH, Brix, and titratable acidity were measured (see Table 6) and the beverage was poured into a glass bottle and stored at 4°C.

**Table 6: pH, Brix and Titratable Acidity of Beverages**

| **Beverage** | **pH** | **Brix** | **Titratable Acidity (% w/w citric acid)** |
|---|---|---|---|
| 2% D-Psicose in Citric Acid/Potassium Citrate Buffer | 3.29 | 2.2 | 0.195 |
| 2% D-Psicose and 220 ppm Rebaudioside C in Citric Acid/Potassium Citrate Buffer | 3.29 | 2.2 | 0.195 |
| 2% D-Psicose Lemon-lime Carbonated Soft Drink | 3.28 | 2.2 | 0.195 |
| 2% D-Psicose and 220 ppm Rebaudioside C in Lemon-lime Carbonated Soft Drink | 3.28 | 2.2 | 0.195 |

### Taste Evaluation

Taste tests were carried out with eight panelists. Bottles were removed from the refrigerator and about 50 ml of beverage was poured into 4 oz- plastic cups. Panelists were given mineral water to rinse their mouth before tasting and between tasting different samples. Unsalted crackers were also given to panelists to eat. Taste tests were done in two rounds: a first round in which a sample of D-psicose in citric acid/potassium citrate buffer and a sample of D-psicose and Reb-C in citric acid/potassium citrate buffer were evaluated, and a second round in which a sample of D-psicose in a lemon lime carbonated soft drink and a sample of D-psicose and Reb-C in a lemon lime carbonated soft drink were evaluated. In each round, panelists were asked to e choose the sweetest sample among the pair, then rate the sweetness level against control solutions of 1%, 1.5%, and 2% sucrose in citric acid/potassium citrate buffer.

All eight panelists identified the sample containing 2% D-psicose and 220 ppm Rebaudioside C as the sweeter sample, regardless of which beverage matrix was used.

The majority of panelists determined the sample containing 2% D-psicose and 220 ppm Rebaudioside C as having the same or greater sweetness than the 2% sucrose in citric acid/potassium citrate buffer. 2% D-psicose has a sweetness equivalence of 1.2% sucrose in the absence of Rebaudioside C. Rebaudioside C at 220 ppm in citric acid/potassium citrate buffer has a sucrose equivalence of less than 1.0%. Accordingly, 220 ppm Rebaudioside C acted to enhance the sweetness of the citric acid/potassium citrate buffer-based beverage containing 2% D-psicose.

### EXAMPLE 2: Taste Improvement of Beverages Containing Rebaudioside A [reference example]

### Beverage Preparation

Enhanced water beverages were prepared with the ingredients provided in Tables 7 and 8 Ingredients were added to treated water and mixed until completely dissolved. For each formulation, 5 liters of beverage was made, pasteurized (90°C for 30 sec), hot-filled in 20oz plastic bottles and stored at ambient temperature. Some bottles were randomly picked and kept in the refrigerator at 4°C for taste evaluation.

**Table 7: Enhanced Water Beverage with Rebaudioside A and D-Psicose**

| **Ingredient** | **Amount (g)** |
|---|---|
| Water | 98.87 |
| D-Psicose | 0.5 |
| Citric Acid | 0.216 |
| Mineral Blend | 0.204 |
| Vitamin Premix | 0.049 |
| Rebaudioside A (>97%) | 0.02 |
| Lemon-lime flavor | 0.141 |
| **TOTAL** | **100 g** |

**Table 8: Enhanced Water Beverage with Rebaudioside A and Erythritol**

| **Ingredient** | **Amount (g)** |
|---|---|
| Water | 98.87 |
| Erythritol | 0.5 |
| Citric Acid | 0.216 |
| Mineral Blend | 0.204 |
| Vitamin Premix | 0.049 |
| Rebaudioside A (>97%) | 0.02 |
| Lemon-lime flavor | 0.141 |
| **TOTAL** | **100 g** |

### Taste Evaluation

Taste tests were carried out with 5 panelists. Bottles were removed from the refrigerator and about 50ml of beverage poured in 4 oz- plastic cups. Panelists were given mineral water to rinse their mouth before tasting, also between tasting different samples. Unsalted crackers were also given to panelists. Two samples (50ml each) were randomly presented and each panelist was asked to evaluate each sample for overall sweetness and taste profile, and then select the one with a better taste profile. One sample was the enhanced water beverage of Table 7 (D-psicose and Rebaudioside A) at 4°C and the other sample was the enhanced water beverage of Table 8 (D-psicose and erythritol) at 4°C.

All panelists chose the enhanced water beverage of Table 7 containing D-psicose and Rebaudioside A over the enhanced water beverage of Table 8 containing erythritol and Rebaudioside A. A number of panelists noted that the flavor of the D-psicose/Rebaudioside A beverage was more rounded in flavor while the Rebaudioside A/erythritol beverage was more sharp and acidic.

### EXAMPLE 3: Taste Improvement of Lemon-lime Carbonated Soft Drinks (CSD) Containing Rebaudioside A with D-psicose [reference example]

### Beverage Preparation

Lemon-lime carbonated soft drinks were prepared with the ingredients provided in Tables 9-11. The ingredients were dissolved in treated water in the amount enough to constitute a syrup, from which 1 part was mixed with 5.5 parts of carbonated water to constitute a finished beverage with a carbonation of 3.7 volumes of carbon dioxide (CO₂). Finished beverages were poured in 300ml-glass bottles and stored in the refrigerator at 4°C until taste evaluation.

**Table 9: Lemon-lime Carbonated Soft Drink with 360 ppm Rebaudioside A and 2% D-Psicose**

| **Ingredient** | **Amount (g)** |
|---|---|
| Water | 97.66 |
| D-Psicose | 2.0 |
| Citric Acid | 0.18 |
| Potassium Citrate | 0.06 |
| Potassium Benzoate | 0.025 |
| Rebaudioside A (>97%) | 0.036 |
| Lemon-lime flavor | 0.039 |
| **TOTAL** | **100 g** |

**Table 10: Lemon-lime Carbonated Soft Drink with 400 ppm Rebaudioside A and 2% D-Psicose**

| **Ingredient** | **Amount (g)** |
|---|---|
| Water | 97.656 |
| D-Psicose | 2.0 |
| Citric Acid | 0.18 |
| Potassium Citrate | 0.06 |
| Potassium Benzoate | 0.025 |
| Rebaudioside A (>97%) | 0.040 |
| Lemon-lime flavor | 0.039 |
| **TOTAL** | **100 g** |

**Table 11: Lemon-lime Carbonated Soft Drink with 420 ppm Rebaudioside A**

| **Ingredient** | **Amount (g)** |
|---|---|
| Water | 99.656 |
| Citric Acid | 0.18 |
| Potassium Citrate | 0.06 |
| Potassium Benzoate | 0.025 |
| Rebaudioside A (>97%) | 0.042 |
| Lemon-lime flavor | 0.039 |
| **TOTAL** | **100 g** |

### Taste Evaluation

Taste tests were carried out with 5 panelists. Bottles were removed from the refrigerator and about 50 ml of beverage poured in 4 oz- plastic cups. Panelists were given mineral water to rinse their mouth before tasting and between tasting different samples. Unsalted crackers were also given. Three samples were randomly presented and each panelist was asked to evaluate each sample for overall sweetness and taste profile, and then select the one with a better taste profile. One sample was the lemon-lime carbonated soft drink of Table 9, a second sample was the lemon-lime carbonated soft drink of Table 10 and a third sample was the lemon-lime carbonated soft drink of Table 11.

All panelists chose sample the lemon-lime carbonated soft drink of Table 9 containing 360 ppm Rebaudioside A and 2% D-psicose (1:5.5 weight ratio) as the most rounded in sweetness and flavor with no aftertaste, no bitterness and no sweetness lingering. The sample was also found to have the sweetness profile most similar to sucrose. All panelists chose the lemon-lime carbonated soft drink of Table 10 containing 400 ppm Rebaudioside A and 2% D-psicose (1:5 weight ratio) as the next best tasting sample. The sample of the lemon-lime carbonated soft drink of Table 11 was reported to have bitterness and some sweetness lingering properties.

### EXAMPLE 4

### : D-Psicose as Taste Modulator for Steviol Glycosides in Lemon-Lime Carbonated Soft Drinks (CSD)

The performance of D-psicose in lemon lime CSD was evaluated to and assess whether this ingredient can modulate in a positive way the sweetness and taste brought by steviol glycosides (Rebaudioside A and Rebaudioside M), particularly by reducing or suppressing their sweet lingering, bitterness and licorice aftertaste. Lemon lime CSD were made with 1) sucrose, steviol glycosides and D-psicose (60% and 30% reduced calorie), 2) steviol glycosides and D-psicose (zero calorie) and compared with full sugar one (control) in terms of overall sweetness and taste profile.

### Beverage Preparation

Lemon lime CSD were made first by making syrup from which 1 part was mixed with 5.5 parts of carbonated water to constitute a finished beverage with a carbonation of 3.7 volumes of carbon dioxide (CO₂). Dry ingredients were dissolved in the syrup water followed by dissolving the lemon lime flavor. Citric acid and buffer were added in a sufficient amount to bring pH to 3.3 and total titratable acidity (TTA) to 0.117% w/v in finished beverages. Finished beverages were filled in 300ml-glass bottles and stored at ambient temperature for one week before taste evaluation.

Lemon-lime carbonated soft drinks were prepared with the ingredients provided in Tables 12-15.

**Table 12: 30% reduced calorie lemon-lime CSD**

| **Ingredient** | **Amount (g)** |
|---|---|
| Water | 91.54 |
| Citric acid | 0.117 |
| Sodium citrate | 0.027 |
| Sodium benzoate | 0.018 |
| Rebaudioside-A 97% | 0.0075 |
| D-psicose | 1.2 |
| Sucrose | 7 |
| Lemon-lime flavor | 0.087 |
| **TOTAL** | **100 g** |

**Table 13: 60% reduced calorie lemon-lime CSD**

| **Ingredient** | **Amount (g)** |
|---|---|
| Water | 92.24 |
| Citric acid | 0.117 |
| Sodium citrate | 0.027 |
| Sodium benzoate | 0.018 |
| Rebaudioside-A 97% | 0.015 |
| D-psicose | 3.5 |
| Sucrose | 4 |
| Lemon-lime flavor | 0.087 |
| **TOTAL** | **100 g** |

**Table 14: Zero calorie lemon-lime CSD**

| **Ingredient** | **Amount (g)** |
|---|---|
| Water | 97.6 |
| Citric acid | 0.117 |
| Sodium citrate | 0.027 |
| Sodium benzoate | 0.018 |
| Rebaudioside-M | 0.05 |
| D-psicose | 2.1 |
| Lemon-lime flavor | 0.087 |
| **TOTAL** | **100 g** |

**Table 15: Full sugar (control) lemon-lime CSD**

| **Ingredient** | **Amount (g)** |
|---|---|
| Water | 89.75 |
| Citric acid | 0.117 |
| Sodium citrate | 0.027 |
| Sodium benzoate | 0.018 |
| Sucrose | 10 |
| Lemon-lime flavor | 0.087 |
| **TOTAL** | **100 g** |

### Taste Evaluation

A trained panel evaluated the 30% (n=14) and 60% reduced calorie lemon lime CSD (n=13), while the zero calorie lemon lime CSD was evaluated by an expert panel (n=3) made up of product developers. A triangle test was used to compare the 30% and 60% reduced calorie beverages to the full sugar control. In each set, the trained panel was randomly given 3 samples in which two were the same and one different and asked to choose the one different. For the zero calorie lemon lime CSD, expert panelists were given evaluation sheets and asked to write comments on overall sweetness and taste profile. After one week at room temperature, beverages were refrigerated and served cold. Bottles were removed from the refrigerator and about 50 ml of beverage poured in 4 oz- plastic cups. Panelists were given mineral water for mouth rinsing before tasting and between tasting different samples. Unsalted crackers were also given to panelists to eat followed by mouth-rinsing with mineral water before tasting the next sample.

The triangle test where the 30% reduced calorie lemon lime CSD was compared to the full sugar control showed that among the 14 panelists, six chose the correct sample while eight chose the incorrect sample as different (p-value 0.31). The triangle test on the 60% reduced calorie lemon lime in comparison with the full sugar control showed that among the 13 panelists, four chose the correct sample while 9 chose the incorrect sample as different (p-value 0.68). These results showed that the panelists could not detect differences between the reduced calorie lemon lime CSD formulated with D-psicose and Rebaudioside A (comparative) and the full sugar control formulated with sucrose. At such low sugar content, Rebaudioside A sweet lingering, bitterness, licorice aftertaste and less mouth feel are easily detected. The results showed that D-psicose modulated Rebaudiose A and improved the overall sweetness and taste profile, making it possible to formulate beverages with fewer calories with improved taste.

The evaluation of the zero calorie lemon lime CSD by the expert panel showed that it had a faster and more rounded sweetness and flavor profile, with very low sweet lingering and no bitterness or licorice aftertaste, showing that D-psicose helped reduce or eliminate these unwanted characteristics.

## Claims

1. A beverage comprising the rare sugar D-psicose and the high potency sweetener Rebaudioside M; wherein
the Rebaudioside M is greater than 80% pure;
the D-psicose is present in an amount from 0.1% to 2% by weight; and
the weight ratio of Rebaudioside M to D-psicose is from 1:25 to 1:100.

2. The beverage of claim 1, wherein Rebaudioside M is greater than 95% pure.

3. The beverage of claim 1 or claim 2, wherein the beverage is selected from a carbonated or non-carbonated beverage.

4. The beverage of any of claims 1-3, wherein the beverage matrix is selected from the group consisting of water, phosphoric acid, citric acid, tartaric acid, lactic acid, buffer comprising such acids and combinations thereof.

5. The beverage of any of claims 1-4, further comprising at least one additional sweetener selected from the group consisting of natural sweeteners, synthetic high potency sweeteners and combinations thereof.

6. The beverage of any of claims 1-5, further comprising one or more additives selected from the group consisting of carbohydrates, polyols, amino acids and their corresponding salts, poly-amino acids and their corresponding salts, sugar acids and their corresponding salts, nucleotides, organic acids, inorganic acids, organic salts including organic acid salts and organic base salts, inorganic salts, bitter compounds, flavorants and flavoring ingredients, astringent compounds, proteins or protein hydrolysates, surfactants, emulsifiers, weighing agents, gums, antioxidants, colorants, flavonoids, alcohols, polymers and combinations thereof.

7. The beverage of any of claims 1-6, further comprising one or more functional ingredients selected from the group consisting of saponins, antioxidants, dietary fiber sources, fatty acids, vitamins, glucosamine, minerals, preservatives, hydration agents, probiotics, prebiotics, weight management agents, osteoporosis management agents, phytoestrogens, long chain primary aliphatic saturated alcohols, phytosterols and combinations thereof.

8. The beverage of claim 1, wherein the Rebaudioside M is greater than about 97% pure.

9. The beverage of claim 1, wherein the ratio of Rebaudioside M to D-psicose is from 1:30 to 1:50.

10. The beverage of claim 1, wherein the beverage further comprises sucrose.

11. The beverage of claim 1, wherein the beverage is selected from a full-calorie (i.e. having about 500 kJ (120 calories) per 237 mL (8oz) serving), mid-calorie (i.e. having less than about 250 kJ (60 calories) per 237 mL (8 oz) serving), low-calorie (i.e. having less than 170 kJ (40 calories) per 237 mL (8 oz) serving) or zero-calorie (i.e. having less than 21 kJ (5 calories) per 237 mL (8 oz) serving) beverage.

12. The beverage of claim 1, wherein the beverage is selected from a carbonated soft drink, carbonated cola, carbonated root beer, non-carbonated fruit juice, non-carbonated fruit-flavoured juice, non-carbonated juice drink, non-carbonated nectars, non-carbonated vegetable juice, non-carbonated sports drink, non-carbonated energy drink, non-carbonated enhanced water, non-carbonated enhanced water with vitamins, non-carbonated near water, non-carbonated coconut water, non-carbonated tea-type drink, non-carbonated coffee, non-carbonated cocoa drink, non-carbonated beverage containing milk components, non-carbonated beverage containing cereal extracts and non-carbonated smoothies.

13. The beverage of claim 12, wherein the carbonated soft drink is selected from a lemon-lime flavoured carbonated soft drink, orange flavoured carbonated soft drink, grape flavoured carbonated soft drink, strawberry flavoured carbonated soft drink, pineapple flavoured carbonated soft drink and ginger ale.

14. The beverage of claim 13 wherein the beverage is a reduced calorie beverage or zero-calorie beverage.

## Patentansprüche

1. Getränk, umfassend den seltenen Zucker D-Psicose und den hochwirksamen Süßstoff Rebaudiosid M, wobei
das Rebaudiosid M über 80 % rein ist;
die D-Psicose in einer Menge von 0,1 Gew.-% bis 2 Gew.-% vorhanden ist; und
das Gewichtsverhältnis von Rebaudiosid M zu D-Psicose von 1:25 bis 1:100 beträgt.

2. Getränk gemäß Anspruch 1, wobei das Rebaudiosid M über 95 % rein ist.

3. Getränk gemäß Anspruch 1 oder Anspruch 2, wobei das Getränk ausgewählt ist aus einem kohlensäurehaltigen und einem nicht kohlensäurehaltigen Getränk.

4. Getränk gemäß einem der Ansprüche 1-3, wobei die Getränkematrix ausgewählt ist aus der Gruppe bestehend aus Wasser, Phosphorsäure, Citronensäure, Weinsäure, Milchsäure, Puffer, der derartige Säuren umfasst, und Kombinationen davon.

5. Getränk gemäß einem der Ansprüche 1-4, ferner umfassend wenigstens einen zusätzlichen Süßstoff ausgewählt aus der Gruppe bestehend aus natürlichen Süßstoffen, synthetischen hochwirksamen Süßstoffen und Kombinationen davon.

6. Getränk gemäß einem der Ansprüche 1-5, ferner umfassend einen oder mehrere Zusatzstoffe ausgewählt aus der Gruppe bestehend aus Kohlenhydraten, Polyolen, Aminosäuren und ihren entsprechenden Salzen, Polyaminosäuren und ihren entsprechenden Salzen, Zuckersäuren und ihren entsprechenden Salzen, Nukleotiden, organischen Säuren, anorganischen Säuren, organischen Salzen, einschließlich Salzen organischer Säuren und Salzen organischer Basen, anorganischen Salzen, Bitterverbindungen, Aromastoffen und aromatisierenden Inhaltsstoffen, adstringierenden Verbindungen, Proteinen oder Proteinhydrolysaten, grenzflächenaktiven Mitteln, Emulgatoren, Gewichtungsmitteln, Gummis, Antioxidationsmitteln, Farbstoffen, Flavonoiden, Alkoholen, Polymeren und Kombinationen davon.

7. Getränk gemäß einem der Ansprüche 1-6, ferner umfassend einen oder mehrere funktionelle Inhaltsstoffe ausgewählt aus der Gruppe bestehend aus Saponinen, Antioxidationsmitteln, Ballaststoffquellen, Fettsäuren, Vitaminen, Glucosamin, Mineralstoffen, Konservierungsmitteln, Hydrierungsmitteln, Probiotika, Präbiotika, Mittel zum Gewichtsmanagement, Mitteln zum Osteoporosemanagement, Phytoestrogenen, langkettigen primären aliphatischen gesättigten Alkoholen, Phytosterolen und Kombinationen davon.

8. Getränk gemäß Anspruch 1, wobei das Rebaudiosid M über etwa 97 % rein ist.

9. Getränk gemäß Anspruch 1, wobei das Verhältnis von Rebaudiosid M zu D-Psicose von 1:30 bis 1:50 beträgt.

10. Getränk gemäß Anspruch 1, wobei das Getränk ferner Saccharose umfasst.

11. Getränk gemäß Anspruch 1, wobei das Getränk ausgewählt ist aus einem kalorienreichen (d. h. mit etwa 500 kJ (120 Kalorien) pro Portion von 237 ml (8 oz)), mittelkalorischen (d. h. mit weniger als etwa 250 kJ (60 Kalorien) pro Portion von 237 ml (8 oz)), kalorienarmen (d. h. mit weniger als 170 kJ (40 Kalorien) pro Portion von 237 ml (8 oz)) und kalorienfreien (d. h. mit weniger als 21 kJ (5 Kalorien) pro Portion von 237 ml (8 oz)) Getränk.

12. Getränk gemäß Anspruch 1, wobei das Getränk ausgewählt ist aus einer/einem kohlensäurehaltigen Limonade, kohlesäurehaltigen Cola, kohlesäurehaltigen Kräuterlimonade, nicht kohlesäurehaltigen Fruchtsaft, nicht kohlesäurehaltigen Saft mit Fruchtaroma, nicht kohlesäurehaltigen Saftgetränk, nicht kohlesäurehaltigen Nektar, nicht kohlesäurehaltigen Gemüsesaft, nicht kohlesäurehaltigen Sportgetränk, nicht kohlesäurehaltigen Energiegetränk, nicht kohlesäurehaltigen verstärkten Wasser, nicht kohlesäurehaltigen verstärkten Wasser mit Vitaminen, nicht kohlesäurehaltigen Wassergetränk, nicht kohlesäurehaltigen Kokosnusswasser, nicht kohlesäurehaltigen teeartigen Getränk, nicht kohlesäurehaltigen Kaffee, nicht kohlesäurehaltigen Kakaogetränk, nicht kohlesäurehaltigen Getränk, das Milchkomponenten enthält, nicht kohlesäurehaltigen Getränk, das Getreideextrakte enthält, und nicht kohlesäurehaltigen Smoothie.

13. Getränk gemäß Anspruch 12, wobei die kohlensäurehaltige Limonade ausgewählt ist aus einer kohlensäurehaltigen Limonade mit Zitrone-Limette-Aroma, kohlensäurehaltigen Limonade mit Orangenaroma, kohlensäurehaltigen Limonade mit Traubenaroma, kohlensäurehaltigen Limonade mit Erdbeeraroma, kohlensäurehaltigen Limonade mit Ananasaroma und Ginger Ale.

14. Getränk gemäß Anspruch 13, wobei das Getränk ein Getränk mit verringertem Kaloriengehalt oder ein kalorienfreies Getränk ist.

## Revendications

1. Boisson comprenant le sucre rare, le D-psicose, et l'édulcorant très puissant, le rébaudioside M; dans laquelle
le rébaudioside M possède une pureté supérieure à 80% ;
le D-psicose est présent selon une quantité allant de 0,1% à 2% en poids ; et
le rapport pondéral du rébaudioside M au D-psicose va de 1:25 à 1:100.

2. Boisson selon la revendication 1, dans laquelle le rébaudioside M possède une pureté supérieure à 95%.

3. Boisson selon la revendication 1 ou la revendication 2, la boisson étant sélectionnée parmi une boisson gazeuse ou non gazeuse.

4. Boisson selon l'une quelconque des revendications 1-3, dans laquelle la matrice de boisson est choisie dans le groupe constitué par l'eau, l'acide phosphorique, l'acide citrique, l'acide tartrique, l'acide lactique, un tampon comprenant de tels acides et des combinaisons de ceux-ci.

5. Boisson selon l'une quelconque des revendications 1-4, comprenant en outre au moins un édulcorant supplémentaire choisi dans le groupe constitué par les édulcorants naturels, les édulcorants très puissants synthétiques, et des combinaisons de ceux-ci.

6. Boisson selon l'une quelconque des revendications 1-5, comprenant en outre un ou plusieurs additifs choisis dans le groupe constitué par les glucides, les polyols, les acides aminés et leurs sels correspondants, les acides polyaminés et leurs sels correspondants, les acides de sucre et leurs sels correspondants, les nucléotides, les acides organiques, les acides inorganiques, les sels organiques y compris les sels d'acides organiques et les sels de bases organiques, les sels inorganiques, les composés amers, les arômes et les ingrédients aromatisants, les composés astringents, les protéines ou les hydrolysats de protéine, les agents tensioactifs, les émulsifiants, les agents de charge, les gommes, les antioxydants, les colorants, les flavonoïdes, les alcools, les polymères, et des combinaisons de ceux-ci.

7. Boisson selon l'une quelconque des revendications 1-6, comprenant en outre un ou plusieurs ingrédients fonctionnels choisis dans le groupe constitué par les saponines, les antioxydants, les sources de fibres alimentaires, les acides gras, les vitamines, la glucosamine, les minéraux, les conservateurs, les agents d'hydratation, les probiotiques, les prébiotiques, les agents de gestion du poids, les agents de gestion de l'ostéoporose, les phyto-œstrogènes, les alcools saturés aliphatiques primaires à longue chaîne, les phytostérols et des combinaisons de ceux-ci.

8. Boisson selon la revendication 1, dans laquelle le rébaudioside M possède une pureté supérieure à environ 97%.

9. Boisson selon la revendication 1, dans laquelle le rapport du rébaudioside M au D-psicose va de 1:30 à 1:50.

10. Boisson selon la revendication 1, la boisson comprenant en outre du saccharose.

11. Boisson selon la revendication 1, la boisson étant choisie parmi une boisson riche en calories (c'est-à-dire possédant environ 500 kJ (120 calories) par portion de 237 ml (8 onces)), moyennement calorique (c'est-à-dire possédant moins d'environ 250 kJ (60 calories) par portion de 237 ml (8 onces)), faiblement calorique (c'est-à-dire possédant moins 170 kJ (40 calories) par portion de 237 ml (8 onces)), ou zéro calories (c'est-à-dire possédant moins de 21 kJ (5 calories) par portion de 237 ml (8 onces)).

12. Boisson selon la revendication 1, la boisson étant choisie parmi une boisson non alcoolisée gazeuse, un cola gazeux, une bière de racine gazeuse, un jus de fruits non gazeux, un jus non gazeux aromatisé aux fruits, une boisson non gazeuse à base de jus, des nectars non gazeux, un jus de légumes non gazeux, une boisson pour sportifs non gazeuse, une boisson énergisante non gazeuse, une eau améliorée non gazeuse, une eau améliorée par des vitamines et non gazeuse, une boisson non gazeuse proche de l'eau, une eau de noix de coco non gazeuse, une boisson non gazeuse de type thé, un café non gazeux, une boisson non gazeuse à base de cacao, une boisson non gazeuse contenant des composants du lait, une boisson non gazeuse contenant des extraits de céréales et des frappés aux fruits non gazeux.

13. Boisson selon la revendication 12, la boisson non alcoolisée gazeuse étant choisie parmi une boisson non alcoolisée gazeuse et aromatisée au citron-citron vert, une boisson non alcoolisée gazeuse et aromatisée à l'orange, une boisson non alcoolisée gazeuse et aromatisée au raisin, une boisson non alcoolisée gazeuse et aromatisée à la fraise, une boisson non alcoolisée gazeuse et aromatisée à l'ananas, et un soda au gingembre.

14. Boisson selon la revendication 13, la boisson étant une boisson pauvre en calories ou une boisson zéro calories.
